# EUROPEAN PATENT APPLICATION

(11) **EP 1 378 885 A2**
(43) Date of publication of application: **07.01.2004**
(21) Application number: 03253913.2
(22) Date of filing: 20.06.2003
(51) Int. Cl.: G10L 15/14

(54) **Word-spotting apparatus, word-spotting method, and word-spotting program**

(30) Priority: 03.07.2002 JP 2002194235; 03.07.2002 JP 2002194236; 03.07.2002 JP 2002194237
(71) Applicant: Pioneer Corporation, Meguro-ku, Tokyo (JP)
(72) Inventor: Kobayashi, Hajime, c/o Pioneer Corporation, Tsurugashima-shi, Saitama-ken (JP)
(74) Representative: Haley, Stephen

(57) **Abstract**

The word-spotting apparatus is provided with: a feature parameter generator (5) which extracts a speech segment from an input utterance, divides it into frames, and generates feature parameters of the utterance; an acoustic model storage (6) which stores feature parameters of speech at a subword level; keyword model generator (8) which generates a keyword model using pronunciation data of a keyword outputted from a keyword storage (7) and feature parameters outputted from the acoustic model storage (6); a keyword likelihood calculator (11, 21) which calculates keyword similarity between the feature parameters of the utterance and feature parameters of the keyword model; and the Viterbi processor (14, 24, 32, 42) which calculates cumulative similarity of the keyword model.

## Description

The present invention relates to a word-spotting apparatus, word-spotting method, and word-spotting program. More particularly, it relates to a word-spotting apparatus, word-spotting method, and word-spotting program which can perform speech recognition suitably even if an extraneous-speech model does not perform well in dealing with an input utterance as well as to a word-spotting apparatus, word-spotting method, and word-spotting program which use normalized cumulative similarity obtained by normalizing cumulative similarity with respect to word length and are suitable for speech recognition using keyword models with a small number of states.

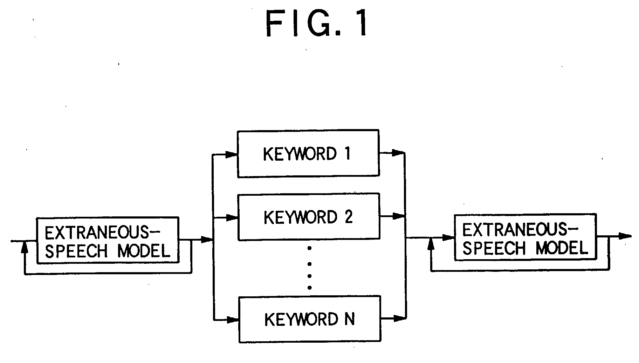

FIG. 1 is a conceptual diagram showing a configuration of a keyword model λ consisting of keywords connected at both ends with extraneous-speech models. In this example, similarity is expressed as likelihood (probability).

Input speech is divided into frames and feature parameters of the input speech are output. The feature parameters here are obtained by vector quantization of energy per frequency band or the like. More specifically, vector quantization of linear prediction coefficients, LPC Cepstrum, or energy per frequency band is used commonly.

On the other hand, pronunciation data of keywords is output from a keyword database and pronunciation data of extraneous-speech is output from an extraneous-speech database and a keyword model is generated by connecting the keywords with extraneous-speech models at both ends. Then, an acoustic model and transition probabilities which correspond to pronunciation data of the keyword model are extracted from an acoustic model database to generate feature parameters of the keyword model.

Then, the keyword likelihood calculation device calculates and outputs keyword likelihood between the feature parameters of the input speech and feature parameters of the keyword model.

Specifically, likelihood (occurrence probability) is calculated by comparing the feature parameters of the input speech with the feature parameters of the keyword model in each state on a frame-by-frame basis and the results are output as the state likelihood of the given state at each time point.

Actually, to improve the speech recognition rate, two types of database--keyword database and extraneous-speech database--are prepared, a keyword model consisting of keywords connected at both ends with extraneous-speech models and an extraneous-speech model consisting of extraneous speech connected at both ends with extraneous-speech models are generated, and a keyword is recognized using cumulative keyword likelihood which is determined by the Viterbi algorithm method from a route containing the keyword model.

When performing speech recognition by the Viterbi algorithm method based on a model such as a Filler model which outputs extremely small distance for any utterance, the smaller the number of states of a keyword, the smaller the cumulative distance between the feature parameters of the utterance and feature parameters of the keyword, and thus the more difficult it tends to be to extract the correct keyword. To solve this problem, there is a speech recognition technique which uses normalized cumulative distance obtained by normalizing cumulative distance with respect to word length, as a score for judging recognition results so that they will not depend on word length. For example, a technique for normalizing final probability (a kind of cumulative similarity) using a normalized frame count of a speech segment is disclosed in paragraph [0099] of Japanese Patent Application Laid-Open Publication No. 6-167994.

Actually, to improve the speech recognition accuracy, two types of database--keyword database and extraneous-speech database--are prepared, a keyword model consisting of keywords connected at both ends with wildcard models as well as an extraneous-speech model are generated, cumulative keyword distance is calculated by the Viterbi algorithm method from a route containing the keyword model, and cumulative extraneous-speech distance is calculated by the Viterbi algorithm method from a route containing the extraneous-speech model. The cumulative extraneous-speech distance is subtracted from the cumulative keyword distance, and the resulting difference is normalized with respect to word length to output normalized cumulative distance, which is used for speech recognition.

Normally, in HMMs (Hidden Markov Models), probability density of state durations is a logarithmic function. However, this permits unrealistic state durations and does not provide an appropriate speech model.

To solve this problem, a technique (semi-Markov model) is available which involves incorporating probability density of state durations explicitly into HMMs and learning them from a speech database.

Now, description will be given of how to calculate cumulative distance, a kind of cumulative similarity, using the Viterbi algorithm method.

FIG. 3 is a conceptual diagram showing a configuration of a keyword model λ consisting of keywords connected at both ends with wildcard models.

FIG. 4 shows a trellis used when calculating, by the Viterbi algorithm method, cumulative distance D (t, m) at which the keyword model λ shown in FIG. 3 outputs a symbol sequence {a, b, a}.

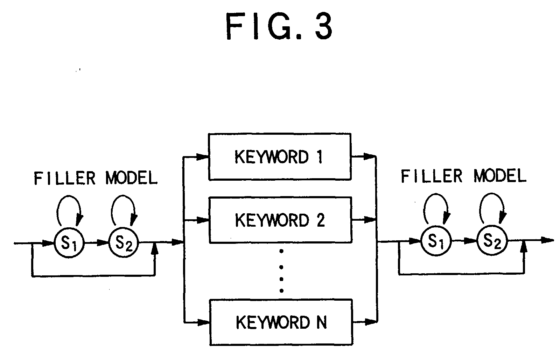

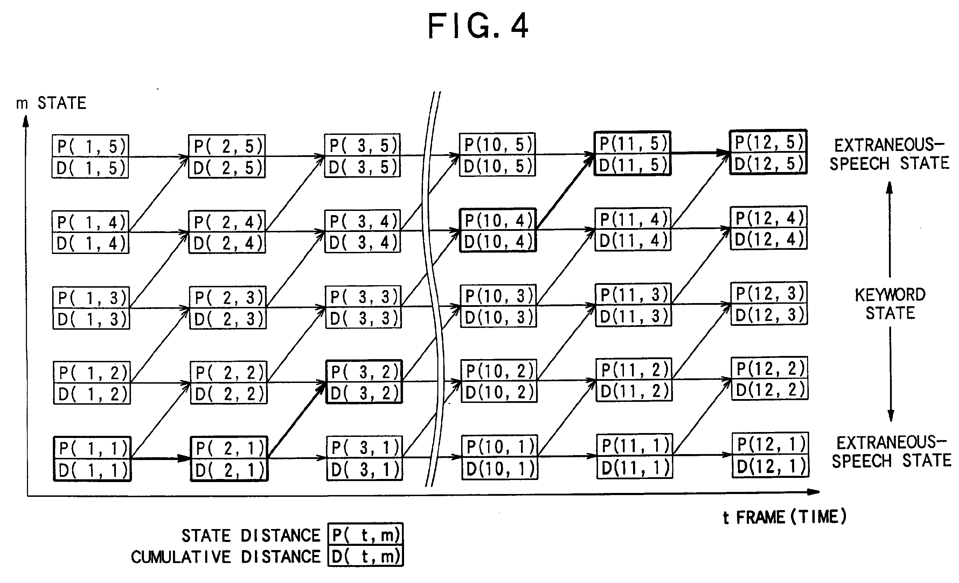

The arrows indicate state transitions. With the keyword model λ commonly used for speech recognition, only two types of state transition are possible--transition to the same state as the current state and transition to the state next to the current state--as shown in FIG. 3. Thus, only two types of arrow are shown in FIG. 4: a horizontal arrow which indicates transition to the same state as the current state and upward slanting arrow which indicates transition to the next state. In the trellis of FIG. 4, the vertical direction represents model states while the horizontal direction represents advances of frames (time).

Description will be given of an example in which the cumulative distance D (t, m) at which the keyword model λ in FIG. 3 outputs the symbol sequence {a, b, a} is calculated according to the trellis.

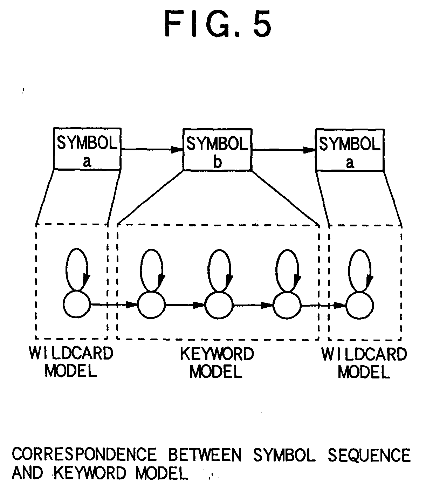

Incidentally, symbol a represents a wildcard and symbol b represents a keyword model. In the trellis diagram of FIG. 4, symbol a indicates the states of extraneous speech represented by the top and bottom rows. Symbol b indicates the keyword itself represented by the three rows sandwiched between the two rows which represent the states of the extraneous speech. FIG. 5 shows correspondence between the symbol sequence and keyword model.

In an initial state, state distance in each state at each time point (frame number) is calculated and stored in a state distance table P (t, m). A distance (Euclidean distance) commonly used as the state distance is calculated using feature parameters (quantized vector of energy per frequency band) extracted from each predetermined frame of an input utterance in time sequence and feature parameters of a keyword stored in a keyword database.

The model used here has a state i S(INITIAL) as its initial state, meaning that the initial state at time point t = 1 is a state i S(INITIAL). The state distance P (1, 1) of the state S1 acting as the state i S(INITIAL) is P (1, 1) = 0. The state distances P (1, 2), P (1, 3), P (1, 4), P (1, 5) of other states S2, S3, S4, S5, respectively, are preferably infinite (∞) in theory. However, since infinity cannot be treated in mathematical calculation, a value Rfm substantially larger than distance values which can be obtained in actual calculations is used in the calculations. Thus, the cumulative distance D (1, 1) = 0 of state S1 is entered and the substantially large value Rfm is used as the cumulative distances D (1, 2), D (1, 3), D (1, 4), D (1, 5) of the other states S2, S3, S4, S5.

As time advances, the cumulative distance D (2, 1) of state S1 at time point t = 2 is given as the sum of the cumulative distance D (1, 1) of state S1 at time point t = 1, state distance P (2, 1) of state S1 at time point t = 2, and goodness of fit of transition b (S1, S1): namely, D (2, 1) = D (1, 1) + P (2, 1) + b (S1, S1). Thus, D (1, 1) + P (2, 1) + b (S1, S1 is entered as the cumulative distance D (2, 1) of state S1 at time point t = 2.

The goodness of fit of transition b (u, v) is an index of the probability that transition from state u to state v will take place. It is a value obtained from the frequency of connection between state u and state v when learning an acoustic model.

In the Viterbi algorithm method, the cumulative distance D (2, 2) of state S2 at time point t = 2 is the smaller of the following two sums: namely, the sum of the cumulative distance D (1, 1) of state S1 at time point t = 1, state distance P (2, 2) of state S2 at time point t = 2, and goodness of fit of transition b (S1 S2), i.e., D (1, 1) + P (2, 2) + b (S1 S2); and the sum of the cumulative distance D (1, 2) of state S2 at time point t = 1, state distance P (2, 2) of state S2 at time point t = 2, and goodness of fit of transition b (S2, S2), i.e., D (1, 2) + P (2, 2) + b (S2, S2). Thus, D (2, 2) = Min {D (1, 1) + P (2, 2) + b (S1 S2), D (1, 2) + P (2, 2) + b (S2, S2)} is entered as the cumulative distance D (2, 2) of state S2 at time point t = 2.

At this time, state transition information is entered in a state transition information table I (2, 2) which indicates the presence or absence of a state transition. For example, if D (1, 1) + P (2, 2) + b (S1, S2) ≥ D (1, 2) + P (2, 2) + b (S2, S2), then the current cumulative distance is D (2, 2) = D (1, 2) + P (2, 2) + b (S2, S2), meaning that the current state D (1, 2) is the same as the previous state. Consequently, the state transition information I (2, 2) contains a symbol or numeric value, for example, "Auto," which indicates no state transition. Conversely, if D (1, 1) + P (2, 2) + b (S1, S2) < D (1, 2) + P (2, 2) + b (S2, S2), then the current cumulative distance is D (2, 2) = D (1, 1) + P (2, 2) + b (S1, S2), meaning that a transition from the previous state D (1, 1) took place. Consequently, the state transition information I (2, 2) contains a symbol or numeric value, for example, "Next," which indicates a state transition.

Actually, as described above, since the adequately large value Rfm is assigned to D (1, 2), D (1, 1) + P (2, 2) + b (S1, S2) < D (1, 2) + P (2, 2) + b (S2, S2) holds and the state transition information I (2, 2) contains the symbol "Next" which indicates that the state D (2, 2) transitioned from the previous state D (1, 1) took place.

Furthermore, in the Viterbi algorithm method, the cumulative distance D (2, 3) of state S3 at time point t = 2 is the smaller of the following two sums: namely, the sum of the cumulative distance D (1, 2) of state S2 at time point t = 1, state distance P (2, 3) of state S3 at time point t = 2, and goodness of fit of transition b (S2, S3), i.e., D (1, 2) + P (2, 3) + b (S2, S3); and the sum of the cumulative distance D (1, 3) of state S3 at time point t = 1, state distance P (2, 3) of state S3 at time point t = 2, and goodness of fit of transition b (S3, S3), i.e., D (1, 3) + P (2, 3) + b (S3, S3). Thus, D (2, 3) = Min {D (1, 2) + P (2, 3) + b (S2, S3), D (1, 3) + P (2, 3) + b (S3, S3)} is entered as the cumulative distance D (2, 3) of state S3 at time point t = 2. The state transition information I (2, 3) contains either "Auto" or "Next" depending on the state transition.

Similarly, the cumulative distance D (2, 4) of state S4 at time point t = 2 is the smaller of D (1, 3) + P (2, 4) + b (S3, S4) and D (1, 4) + P (2, 4) + b (S4, S4). The state transition information I (2, 4) contains either "Auto" or "Next" depending on the state transition.

Also, the cumulative distance D (2, 5) of state S5 at time point t = 2 is the smaller of D (1, 4) + P (2, 5) + b (S4, S5) and D (1, 5) + P (2, 5) + b (S5, S5). The state transition information I (2, 5) contains either "Auto" or "Next" depending on the state transition.

As the state transitions further, the cumulative distances D (3, 1) to D (3, 5) of states S1 to S5 at time point t = 3 are calculated and the state transition information I (3, 1) to I (3, 5) is decided and stored.

Cumulative distances D and state transition information I are calculated similarly for states S1 to S5 at time points t = 4 to 12 and are entered as cumulative distances D (12, m) (m= 1 to 5) of states S1 to S5 in the rightmost column in FIG. 4.

In a trellis, the cumulative distance at which a model outputs a symbol sequence is in the top right-hand corner which represents the final state of the final frame. Thus, in the trellis of FIG. 4, the cumulative distance at which the keyword model λ outputs the symbol sequence {a, b, a} is D (12, 5).

If state transition information I is recorded during Viterbi processing of a symbol sequence λ, and if the Viterbi processing of the symbol sequence λ is finished, the path followed should be available from the recorded state transition information I. By tracing back the locus based on the state transition information I beginning at the last state of the last frame, it is possible to obtain a state sequence (optimum path) which represents the transition process of the symbol sequence λ.

On the other hand, the word lengths used in a normalization process are conventionally keyword segments which correspond to speech segments as disclosed in the prior art document described above.

The above processes are performed on all symbol sequences (e.g., {a, b, b}) stored in the keyword database, and the symbol sequence with the smallest normalized cumulative distance is output as the recognition result.

However, when keywords are extracted from an utterance using a word-spotting apparatus, recognition performance degrades if uttered segments other than keyword segments are long.

The inventor looked into impediments to performance improvement of speech recognition and has found that extraneous-speech models which are not high-performing do not match non-keyword segments (hereinafter referred to as extraneous-speech segments) properly, resulting in low likelihood, and that this phenomenon constitutes an impediment.

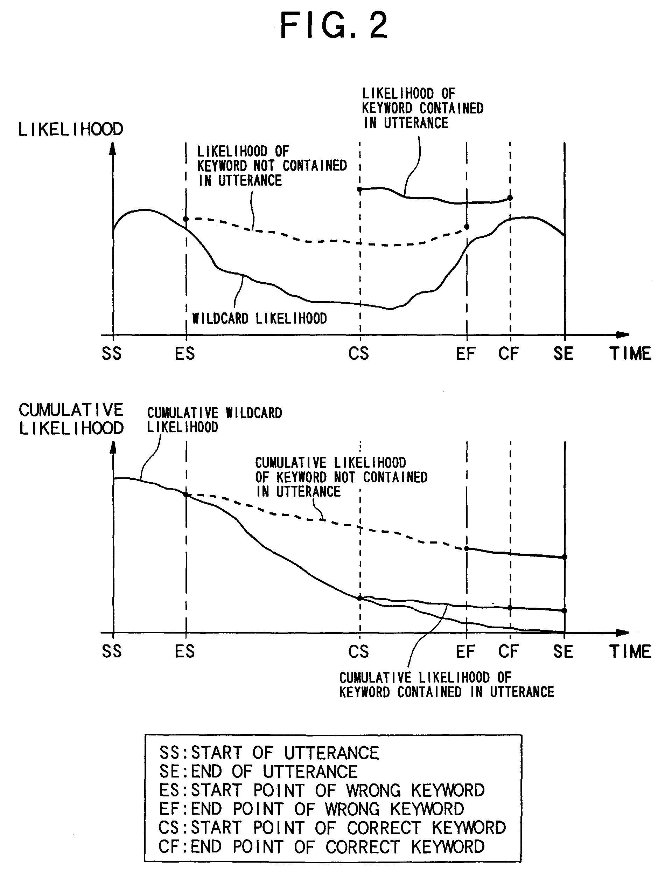

FIG. 2 shows time variations of likelihood and cumulative likelihood on an optimum path for both wrong keyword which is actually output and keyword which should be output (hereinafter referred to as a "correct keyword"). The top graph shows time variations of likelihood and the bottom graph shows time variations of cumulative likelihood. Since the figure handles likelihood, the graphs slope to the right. In the original keyword segment (CS to CF), the likelihood of the correct keyword is higher, but in the extraneous-speech segment (ES to CS), the extraneous-speech likelihood has an extremely small value in some part. If a keyword not contained in the utterance produces a match accidentally in a segment where extraneous speech is actually uttered but the extraneous-speech likelihood is low, the cumulative likelihood of this false keyword tends to become higher than that of the actual keyword contained in the utterance. The inventor found that because of this effect, the cumulative likelihood of a keyword model became lower than that of an extraneous-speech model at the end point (SE) of the speech segment, causing the Viterbi processing to produce wrong results.

An object of the present invention is to provide a word-spotting apparatus, word-spotting method, and word-spotting program which are not affected by an extraneous-speech model that does not perform well enough to match an utterance in an extraneous-speech segment.

The present invention provides a word-spotting apparatus, word-spotting method, and word-spotting program which are not affected by an extraneous-speech model that is not accurate enough to match an utterance in an extraneous-speech segment.

However, in a word-spotting method which uses normalized cumulative distances obtained by normalizing cumulative distances with respect to word length, if a keyword not contained in an utterance produces a match, the optimum path obtained by the Viterbi algorithm method does not suit the input utterance correctly. Specifically, when the word length is regarded to be longer than the conceivable word length of the keyword actually under analysis because one state of a keyword model continues for a long time, if cumulative distances are normalized using a normalized frame count corresponding to a speech segment as word length, the longer the word length of the output keyword, the smaller the normalized cumulative distance of the keyword. As a result, a keyword which is not contained in the utterance and has a smaller cumulative distance than the normalized cumulative distance of the correct keyword may be output. In particular, if a keyword model with a smaller number of states than a keyword model for a keyword contained in an utterance is used for matching, a state which represents the keyword itself often continues for a long time. As a result, since the same state has continued for a long time, an estimated word length of the false keyword is calculated to be longer than the actually conceivable word length accordingly and a normalized frame count of the keyword segment is output based on this estimation. Consequently, state transition cannot be detected correctly and the word length is estimated to be unrealistically long, resulting in a small normalized cumulative distance. This raises the problem that a keyword not contained in the utterance is output as a recognized keyword.

If a keyword model for a keyword not contained in an utterance is used for matching, the optimum path obtained does not necessarily corresponds to an actually available path. If this optimum path is used for normalization, a rather small normalized cumulative distance may result. Consequently, a wrong keyword is liable to be output as a recognized keyword.

The present invention has been made based on the realization that the reason why wrong keywords can be recognized in speech recognition using normalized cumulative distances lies in the fact that no measure is taken even if state transitions continue for an unrealistically long time. Another object of the present invention is to provide a word-spotting apparatus, word-spotting method, and word-spotting program which can avoid a situation in which an unrealistically long path is selected as an optimum path with the result that a wrong keyword is output as a recognized keyword.

Normally, HMMs permit unrealistically long state durations, which can decrease recognition accuracy. Semi-Markov models involve a massive amounts of computation, making it difficult to perform real-time processing.

In word spotting, if a keyword not contained in an utterance produces a match, the optimum path obtained by the Viterbi algorithm method does not suit the input utterance correctly. Specifically, a keyword with a word length regarded to be longer than the conceivable word length of the keyword actually under analysis is output because one state of a keyword model continues for a long time. In particular, if a keyword model with a smaller number of states than a keyword model for a keyword contained in an utterance is used for matching, a state which represents the keyword itself often continues for a long time.

If no keyword is contained in an utterance, the optimum path of a keyword obtained by the Viterbi algorithm method may not suit the input utterance. Consequently, cumulative distance becomes small and a false keyword is liable to be output as a recognized keyword.

The present invention has been made based on the realization that the reason why wrong keywords can be recognized in speech recognition lies in the fact that no measure is taken even if state transitions continue for an unrealistically long time. Another object of the present invention is to provide a word-spotting apparatus, word-spotting method, and word-spotting program which can avoid a situation in which an unrealistically long path is selected as an optimum path with the result that a wrong keyword is output as a recognized keyword.

The present invention will be described below. Incidentally, reference numerals used in the accompanying drawings are inserted parenthetically in the following description to help understand the present invention, but this is not intended to limit the present invention to the forms shown in the figures.

The above object of the present invention can be achieved by a word-spotting apparatus, provided with: a feature parameter generating device (5) such as CPU etc., which extracts a speech segment from an input utterance, divides it into frames, and generates feature parameters of the utterance; an acoustic model database (6) such as HD etc., which stores feature parameters of speech at a subword level; keyword model generating device (8) such as CPU etc., which generates a keyword model using pronunciation data of a keyword outputted from a keyword database (7) such as HD etc., and feature parameters outputted from the acoustic model database (6); a keyword similarity calculation device (11, 21) such as CPU etc., which calculates keyword similarity between the feature parameters of the utterance and feature parameters of the keyword model; and a cumulative keyword similarity calculation device (14, 24, 32, 42) such as CPU etc., which calculates cumulative similarity of the keyword model.

In one aspect of the word-spotting apparatus of the present invention, the cumulative keyword similarity calculation device (14, 24, 32, 42) calculates cumulative similarity using the Viterbi algorithm method.

In another aspect of the word-spotting apparatus of the present invention, the word-spotting apparatus further provided with: an extraneous-speech model generating device (10) such as CPU etc., which generates an extraneous-speech model using pronunciation data of extraneous speech outputted from an extraneous-speech database (9) such as HD etc., and feature parameters outputted from the acoustic model database (6); and an extraneous-speech similarity calculation device (12, 22) such as CPU etc., which calculates extraneous-speech similarity between the feature parameters of the utterance and feature parameters of the extraneous-speech model.

In further aspect of the word-spotting apparatus of the present invention, the word-spotting apparatus further provided with a limit value setting device (13, 23) such as CPU etc., wherein: if the extraneous-speech similarity falls outside a preset range, the limit value setting device (13, 23) outputs a preset value as extraneous-speech similarity.

In this way, if extraneous-speech similarity falls outside a preset range, a preset value is output as extraneous-speech similarity. Thus, even if an extraneous-speech model does not perform well enough to match an utterance in an extraneous-speech segment, the impact of this can be eliminated.

Consequently, cumulative similarity is calculated using the Viterbi algorithm method.

In further aspect of the word-spotting apparatus of the present invention, the keyword similarity calculation device (11) calculates keyword likelihood between the feature parameters of the utterance and feature parameters of the keyword model; the extraneous-speech similarity calculation device (12) calculates extraneous-speech likelihood between the feature parameters of the utterance and feature parameters of the extraneous-speech model; if extraneous-speech likelihood is smaller than a preset value, the limit value setting device (13) outputs the preset value as extraneous-speech likelihood; and the cumulative similarity calculation device (14) calculates cumulative likelihood of the keyword model.

In this way, if extraneous-speech likelihood is smaller than a preset value, the preset value is output as extraneous-speech likelihood. Thus, even if an extraneous-speech model does not perform well enough to match an utterance in an extraneous-speech segment, the impact of this can be eliminated.

In further aspect of the word-spotting apparatus of the present invention, the keyword similarity calculation device (21) calculates keyword distance between the feature parameters of the utterance and feature parameters of the keyword model; an extraneous-speech similarity calculation device (22) such as CPU etc., calculates extraneous-speech distance between the feature parameters of the utterance and feature parameters of the extraneous-speech model; if extraneous-speech distance is larger than a preset value, the limit value setting device (23) outputs the preset value as extraneous-speech distance; and the cumulative similarity calculation device (24) calculates cumulative distance of the keyword model.

In this way, if extraneous-speech distance is larger than a preset value, the preset value is output as extraneous-speech distance. Thus, even if an extraneous-speech model does not perform well enough to match an utterance in an extraneous-speech segment, the impact of this can be eliminated.

If extraneous-speech similarity falls outside a preset range, the word-spotting apparatus according to the present invention outputs a preset value as extraneous-speech similarity. Thus, even if an extraneous-speech model does not perform well enough to match an utterance in an extraneous-speech segment, the impact of this can be eliminated.

In further aspect of the word-spotting apparatus of the present invention, the cumulative keyword similarity calculation device (32, 42) outputs state transition information; and the word-spotting apparatus is further provided with: a word length calculation device (34, 44) such as CPU etc., which handles word length according to the number obtained by subtracting a preset value from the number of successive self-transitions, and a cumulative similarity normalization device (35, 45) such as CPU etc., which normalizes cumulative similarity of the utterance based on the cumulative keyword similarity and the word length.

In this way, it is possible to generate feature parameters from an input utterance, generate a keyword model, calculate cumulative keyword similarity, and then normalize cumulative similarity using the word length outputted by the word length calculation device.

In further aspect of the word-spotting apparatus of the present invention, the word-spotting apparatus further provided with: an extraneous-speech model generating device (10) such as CPU etc., which generates an extraneous-speech model using pronunciation data of extraneous speech outputted from an extraneous-speech database (9) and feature parameters outputted from the acoustic model database (6); and an extraneous-speech similarity calculation device (12, 22) such as CPU etc., which calculates extraneous-speech similarity between the feature parameters of the utterance and feature parameters of the extraneous-speech model, a cumulative extraneous-speech similarity calculation device (33, 43) such as CPU etc., which calculates cumulative similarity of the extraneous-speech model, wherein the cumulative similarity normalization device (35, 45) normalizes the cumulative similarity of the utterance based on the cumulative keyword similarity, the cumulative extraneous-speech similarity, and the word length.

In this way, it is possible to generate feature parameters from an input utterance, to generate a keyword model and an extraneous-speech model, to calculate cumulative keyword similarity and cumulative extraneous-speech similarity, and then to normalize cumulative similarity using the word length outputted by the word length calculation device.

This makes it possible to manage the feature parameters generated from the input utterance by the frames obtained by dividing the extracted speech segment.

In further aspect of the word-spotting apparatus of the present invention, the cumulative similarity normalization device (35, 45) normalizes cumulative similarity by dividing the difference between the cumulative keyword similarity and the cumulative extraneous-speech similarity by the word length.

In this way, it is possible to normalize cumulative similarity by dividing the difference between cumulative keyword similarity and cumulative extraneous-speech similarity by word length.

In further aspect of the word-spotting apparatus of the present invention, the keyword similarity calculation device (21) calculates keyword distance between the feature parameters of the utterance and feature parameters of the keyword model; the extraneous-speech similarity calculation device (22) calculates extraneous-speech distance between the feature parameters of the utterance and feature parameters of the extraneous-speech model; the cumulative keyword similarity calculation device (42) calculates cumulative keyword distance while outputting state transition information; the cumulative extraneous-speech similarity calculation device (43) calculates cumulative extraneous-speech distance of the extraneous-speech model; the word length calculation device (44) adds nothing to the word length until a transition to a different state takes place if the number of successive self-transitions exceeds a preset value; and the cumulative similarity normalization device (45) normalizes cumulative distance of the utterance based on the cumulative keyword distance, the cumulative extraneous-speech distance, and the word length.

In this way, it is possible to generate feature parameters from an input utterance, to generate a keyword model and an extraneous-speech model, to calculate cumulative keyword distance and cumulative extraneous-speech distance, and then to normalize cumulative distance using the word length outputted by the word length calculation device.

In further aspect of the word-spotting apparatus of the present invention, the keyword similarity calculation device (11) calculates likelihood between the feature parameters of the utterance and feature parameters of the keyword model; the extraneous-speech similarity calculation device (12) calculates likelihood between the feature parameters of the utterance and feature parameters of the extraneous-speech model; the cumulative keyword similarity calculation device (32) calculates cumulative keyword likelihood while outputting state transition information; the cumulative extraneous-speech similarity calculation device (33) calculates cumulative extraneous-speech likelihood of the extraneous-speech model; the word length calculation device (34) adds a value larger than 1 to the word length until a transition to a different state takes place if the number of successive self-transitions exceeds a preset value; and the cumulative similarity normalization device (35) normalizes cumulative likelihood of the utterance based on the cumulative keyword likelihood, the cumulative extraneous-speech likelihood, and the word length.

In this way, it is possible to generate feature parameters from an input utterance, to generate a keyword model and an extraneous-speech model, to calculate cumulative keyword likelihood and cumulative extraneous-speech likelihood, and then to normalize cumulative likelihood using the word length outputted by the word length calculation device.

Even if the optimum path determined by the Viterbi algorithm method contains a state which continues for a long time, the word-spotting apparatus according to the present invention does not adds any number in excess of a threshold number of self-transitions to word length. Thus, it is possible to prevent a wrong keyword to be output as a result of word length normalization.

In further aspect of the word-spotting apparatus of the present invention, the word-spotting apparatus is further provided with a duration control device (52) such as CPU etc., wherein: the cumulative keyword similarity calculation device (42) outputs state transition information; and the duration control device (52) adds a predetermined value to the cumulative keyword similarity if the number of successive self-transitions exceeds a preset value.

In this way, it is possible to generate feature parameters from an input utterance, to generate a keyword model, to calculate cumulative keyword similarity, and then to add a predetermined value to the cumulative keyword similarity if the number of successive self-transitions exceeds a preset value.

In further aspect of the word-spotting apparatus of the present invention, the keyword similarity calculation device (21) calculates keyword distance between the feature parameters of the utterance and feature parameters of the keyword model; and the cumulative keyword similarity calculation device (42) calculates cumulative keyword distance.

In this way, it is possible to generate feature parameters from an input utterance, to generate a keyword model, to calculate cumulative keyword similarity, and then to add a predetermined value to the cumulative keyword similarity if the number of successive self-transitions exceeds a preset value.

In further aspect of the word-spotting apparatus of the present invention, the keyword similarity calculation device (11) calculates likelihood between the feature parameters of the utterance and feature parameters of the keyword model; and the cumulative keyword similarity calculation device (32) calculates cumulative keyword likelihood.

In this way, it is possible to generate feature parameters from an input utterance, to generate a keyword model, to calculate cumulative keyword similarity, and then to add a predetermined value to the cumulative keyword similarity if the number of successive self-transitions exceeds a preset value.

Even if the optimum path determined by the Viterbi algorithm method contains a state which continues for a long time, the word-spotting apparatus according to the present invention performs Viterbi processing based on adjusted cumulative keyword similarity obtained by adding a predetermined value to cumulative similarity. Thus, unrealistic continuation of self-transitions can be eliminated.

The above object of the present invention can be achieved by a word-spotting method, provided with: a feature parameter generating process for extracting a speech segment from an input utterance, dividing it into frames, and generating feature parameters of the utterance; a keyword model generating process for generating a keyword model using pronunciation data of a keyword outputted from a keyword database (7) such as HD etc., and feature parameters outputted from an acoustic model database (6) such as HD etc., which stores feature parameters of speech at a subword level; a keyword similarity calculation process for calculating keyword similarity between the feature parameters of the utterance and feature parameters of the keyword model; and a cumulative keyword similarity calculation process for calculating cumulative similarity of the keyword model.

In one aspect of the word-spotting method of the present invention, in the cumulative keyword similarity calculation process cumulative similarity using the Viterbi algorithm method is calculated.

In another aspect of the word-spotting method of the present invention, the word-spotting method further provided with: an extraneous-speech model generating process which generates an extraneous-speech model using pronunciation data of extraneous speech outputted from an extraneous-speech database (9) such as HD etc., and feature parameters outputted from the acoustic model database (6); and an extraneous-speech similarity calculation process which calculates extraneous-speech similarity between the feature parameters of the utterance and feature parameters of the extraneous-speech model.

In further aspect of the word-spotting method of the present invention, the word-spotting method further provided with a limit value setting process, wherein: if the extraneous-speech similarity falls outside a preset range, in the limit value setting process a preset value as extraneous-speech similarity is output.

In this way, if extraneous-speech similarity falls outside a preset range, a preset value is output as extraneous-speech similarity. Thus, even if an extraneous-speech model does not perform well enough to match an utterance in an extraneous-speech segment, the impact of this can be eliminated.

In further aspect of the word-spotting method of the present invention, in the keyword similarity calculation process, keyword likelihood between the feature parameters of the utterance and feature parameters of the keyword model is calculated; in the extraneous-speech similarity calculation process, extraneous-speech likelihood between the feature parameters of the utterance and feature parameters of the extraneous-speech model is calculated; if extraneous-speech likelihood is smaller than a preset value, in the limit value setting process, the preset value as extraneous-speech likelihood is output; and in the cumulative similarity calculation process, cumulative likelihood of the keyword model is calculated.

In this way, if extraneous-speech likelihood is smaller than a preset value, the preset value is output as extraneous-speech likelihood. Thus, even if an extraneous-speech model does not perform well enough to match an utterance in an extraneous-speech segment, the impact of this can be eliminated.

In further aspect of the word-spotting method of the present invention, in the keyword similarity calculation process, keyword distance between the feature parameters of the utterance and feature parameters of the keyword model is calculated; an extraneous-speech similarity calculation process calculates extraneous-speech distance between the feature parameters of the utterance and feature parameters of the extraneous-speech model; if extraneous-speech distance is larger than a preset value, in the limit value setting process, the preset value as extraneous-speech distance is output; and in the cumulative similarity calculation process, cumulative distance of the keyword model is calculated.

In this way, if extraneous-speech distance is larger than a preset value, the preset value is output as extraneous-speech distance. Thus, even if an extraneous-speech model does not perform well enough to match an utterance in an extraneous-speech segment, the impact of this can be eliminated.

In further aspect of the word-spotting method of the present invention, in the cumulative keyword similarity calculation process, state transition information is output; and the word-spotting apparatus is further provided with: a word length calculation process which handles word length according to the number obtained by subtracting a preset value from the number of successive self-transitions, and a cumulative similarity normalization process which normalizes cumulative similarity of the utterance based on the cumulative keyword similarity and the word length.

In this way, it is possible to generate feature parameters from an input utterance, generate a keyword model, calculate cumulative keyword similarity, and then normalize cumulative similarity using the word length outputted by the word length calculation device.

In further aspect of the word-spotting method of the present invention, the word-spotting method provided with: an extraneous-speech model generating process which generates an extraneous-speech model using pronunciation data of extraneous speech outputted from an extraneous-speech database (9) and feature parameters outputted from the acoustic model database (6); and an extraneous-speech similarity calculation process which calculates extraneous-speech similarity between the feature parameters of the utterance and feature parameters of the extraneous-speech model, a cumulative extraneous-speech similarity calculation process which calculates cumulative similarity of the extraneous-speech model, wherein in the cumulative similarity normalization process, the cumulative similarity of the utterance based on the cumulative keyword similarity, the cumulative extraneous-speech similarity, and the word length is normalized.

In this way, it is possible to generate feature parameters from an input utterance, to generate a keyword model and an extraneous-speech model, to calculate cumulative keyword similarity and cumulative extraneous-speech similarity, and then to normalize cumulative similarity using the word length outputted by the word length calculation device.

In further aspect of the word-spotting method of the present invention, in the cumulative similarity normalization process, cumulative similarity by dividing the difference between the cumulative keyword similarity and the cumulative extraneous-speech similarity by the word length is normalized.

In this way, it is possible to normalize cumulative similarity by dividing the difference between cumulative keyword similarity and cumulative extraneous-speech similarity by word length.

In further aspect of the word-spotting method of the present invention, in the keyword similarity calculation process, keyword distance between the feature parameters of the utterance and feature parameters of the keyword model is calculated; in the extraneous-speech similarity calculation process, extraneous-speech distance between the feature parameters of the utterance and feature parameters of the extraneous-speech model is calculated; in the cumulative keyword similarity calculation process, cumulative keyword distance while outputting state transition information is calculated; in the cumulative extraneous-speech similarity calculation process, cumulative extraneous-speech distance of the extraneous-speech model is calculated; in the word length calculation process, nothing is added to the word length until a transition to a different state takes place if the number of successive self-transitions exceeds a preset value; and in the cumulative similarity normalization process, cumulative distance of the utterance based on the cumulative keyword distance, the cumulative extraneous-speech distance, and the word length is normalized.

In this way, it is possible to generate feature parameters from an input utterance, to generate a keyword model and an extraneous-speech model, to calculate cumulative keyword distance and cumulative extraneous-speech distance, and then to normalize cumulative distance using the word length outputted by the word length calculation device.

In further aspect of the word-spotting method of the present invention, in the keyword similarity calculation process, likelihood between the feature parameters of the utterance and feature parameters of the keyword model is calculated; in the extraneous-speech similarity calculation process, likelihood between the feature parameters of the utterance and feature parameters of the extraneous-speech model is calculated; in the cumulative keyword similarity calculation process, cumulative keyword likelihood while outputting state transition information is calculated; in the cumulative extraneous-speech similarity calculation process, cumulative extraneous-speech likelihood of the extraneous-speech model is calculated; in the word length calculation process, a value larger than 1 is added to the word length until a transition to a different state takes place if the number of successive self-transitions exceeds a preset value; and in the cumulative similarity normalization process, cumulative likelihood of the utterance based on the cumulative keyword likelihood, the cumulative extraneous-speech likelihood, and the word length is normalized.

In this way, it is possible to generate feature parameters from an input utterance, to generate a keyword model and an extraneous-speech model, to calculate cumulative keyword likelihood and cumulative extraneous-speech likelihood, and then to normalize cumulative likelihood using the word length outputted by the word length calculation device.

In further aspect of the word-spotting method of the present invention, the word-spotting method is further provided with a duration control process, wherein: in the cumulative keyword similarity calculation process, state transition information is output; and in the duration control process, a predetermined value is added to the cumulative keyword similarity if the number of successive self-transitions exceeds a preset value.

In this way, it is possible to generate feature parameters from an input utterance, to generate a keyword model, to calculate cumulative keyword similarity, and then to add a predetermined value to the cumulative keyword similarity if the number of successive self-transitions exceeds a preset value.

In further aspect of the word-spotting method of the present invention, in the keyword similarity calculation process, keyword distance between the feature parameters of the utterance and feature parameters of the keyword model is calculated; and in the cumulative keyword similarity calculation process, cumulative keyword distance is calculated.

In this way, it is possible to generate feature parameters from an input utterance, to generate a keyword model, to calculate cumulative keyword similarity, and then to add a predetermined value to the cumulative keyword similarity if the number of successive self-transitions exceeds a preset value.

In further aspect of the word-spotting method of the present invention, in the keyword similarity calculation process, likelihood between the feature parameters of the utterance and feature parameters of the keyword model is calculated; and in the cumulative keyword similarity calculation process, cumulative keyword likelihood is calculated.

In this way, it is possible to generate feature parameters from an input utterance, to generate a keyword model, to calculate cumulative keyword similarity, and then to add a predetermined value to the cumulative keyword similarity if the number of successive self-transitions exceeds a preset value.

The above object of the present invention can be achieved by a word-spotting program running on a computer included in word-spotting apparatus, wherein the word-spotting program makes the computer function as: a feature parameter generating device (5) which extracts a speech segment from an input utterance, divides it into frames, and generates feature parameters of the utterance; an acoustic model database (6) which stores feature parameters of speech at a subword level; a keyword model generating device (8) which generates a keyword model using pronunciation data of a keyword outputted from a keyword database (7) and feature parameters outputted from the acoustic model database (6); a keyword similarity calculation device (11, 12) which calculates keyword similarity between the feature parameters of the utterance and feature parameters of the keyword model; and a cumulative keyword similarity calculation device (14, 24, 32, 42) which calculates cumulative similarity of the keyword model.

In one aspect of the word-spotting program of the present invention, the cumulative keyword similarity calculation device (14, 24, 32, 42) calculates cumulative similarity using the Viterbi algorithm method.

In another aspect of the word-spotting program of the present invention, an extraneous-speech model generating device (10) which generates an extraneous-speech model using pronunciation data of extraneous speech outputted from an extraneous-speech database (9) and feature parameters outputted from the acoustic model database (6); and an extraneous-speech similarity calculation device (12, 22) which calculates extraneous-speech similarity between the feature parameters of the utterance and feature parameters of the extraneous-speech model.

In further aspect of the word-spotting program of the present invention, the word-spotting program makes the computer further function as a limit value setting device (13, 23) wherein: if the extraneous-speech similarity falls outside a preset range, the limit value setting device (13, 23) outputs a preset value as extraneous-speech similarity.

In this way, if extraneous-speech similarity falls outside a preset range, a preset value is output as extraneous-speech similarity. Thus, even if an extraneous-speech model does not perform well enough to match an utterance in an extraneous-speech segment, the impact of this can be eliminated.

In further aspect of the word-spotting program of the present invention, the keyword similarity calculation device (11) calculates keyword likelihood between the feature parameters of the utterance and feature parameters of the keyword model; the extraneous-speech similarity calculation device (12) calculates extraneous-speech likelihood between the feature parameters of the utterance and feature parameters of the extraneous-speech model; if extraneous-speech likelihood is smaller than a preset value, the limit value setting device (13) outputs the preset value as extraneous-speech likelihood; and the cumulative similarity calculation device (14) calculates cumulative likelihood of the keyword model.

In this way, if extraneous-speech likelihood is smaller than a preset value, the preset value is output as extraneous-speech likelihood. Thus, even if an extraneous-speech model does not perform well enough to match an utterance in an extraneous-speech segment, the impact of this can be eliminated.

In further aspect of the word-spotting program of the present invention, the keyword similarity calculation device (21) calculates keyword distance between the feature parameters of the utterance and feature parameters of the keyword model; the word-spotting program makes the computer further function as: an extraneous-speech similarity calculation device (22) calculates extraneous-speech distance between the feature parameters of the utterance and feature parameters of the extraneous-speech model; if extraneous-speech distance is larger than a preset value, the limit value setting device (23) outputs the preset value as extraneous-speech distance; and the cumulative similarity calculation device (24) calculates cumulative distance of the keyword model.

In this way, if extraneous-speech distance is larger than a preset value, the preset value is output as extraneous-speech distance. Thus, even if an extraneous-speech model does not perform well enough to match an utterance in an extraneous-speech segment, the impact of this can be eliminated.

In further aspect of the word-spotting program of the present invention, the cumulative keyword similarity calculation device (32, 42) outputs state transition information; and the word-spotting program makes the computer further function as: a word length calculation device (34, 44) which handles word length according to the number obtained by subtracting a preset value from the number of successive self-transitions, and a cumulative similarity normalization device (35, 45) which normalizes cumulative similarity of the utterance based on the cumulative keyword similarity and the word length.

In this way, it is possible to generate feature parameters from an input utterance, generate a keyword model, calculate cumulative keyword similarity, and then normalize cumulative similarity using the word length outputted by the word length calculation device.

In further aspect of the word-spotting program of the present invention, an extraneous-speech model generating device (10) which generates an extraneous-speech model using pronunciation data of extraneous speech outputted from an extraneous-speech database (9) and feature parameters outputted from the acoustic model database (6); and an extraneous-speech similarity calculation device (12, 22) which calculates extraneous-speech similarity between the feature parameters of the utterance and feature parameters of the extraneous-speech model, a cumulative extraneous-speech similarity calculation device (33, 43) which calculates cumulative similarity of the extraneous-speech model, wherein the cumulative similarity normalization device (35, 45) normalizes the cumulative similarity of the utterance based on the cumulative keyword similarity, the cumulative extraneous-speech similarity, and the word length.

In this way, it is possible to generate feature parameters from an input utterance, to generate a keyword model and an extraneous-speech model, to calculate cumulative keyword similarity and cumulative extraneous-speech similarity, and then to normalize cumulative similarity using the word length outputted by the word length calculation device.

In further aspect of the word-spotting program of the present invention, the cumulative similarity normalization device (35, 45) normalizes cumulative similarity by dividing the difference between the cumulative keyword similarity and the cumulative extraneous-speech similarity by the word length.

In this way, it is possible to normalize cumulative similarity by dividing the difference between cumulative keyword similarity and cumulative extraneous-speech similarity by word length.

In further aspect of the word-spotting program of the present invention, the keyword similarity calculation device (21) calculates keyword distance between the feature parameters of the utterance and feature parameters of the keyword model; the extraneous-speech similarity calculation device (22) calculates extraneous-speech distance between the feature parameters of the utterance and feature parameters of the extraneous-speech model; the cumulative keyword similarity calculation device (42) calculates cumulative keyword distance while outputting state transition information; the cumulative extraneous-speech similarity calculation device (43) calculates cumulative extraneous-speech distance of the extraneous-speech model; the word length calculation device (44) adds nothing to the word length until a transition to a different state takes place if the number of successive self-transitions exceeds a preset value; and the cumulative similarity normalization device (45) normalizes cumulative distance of the utterance based on the cumulative keyword distance, the cumulative extraneous-speech distance, and the word length.

In this way, it is possible to generate feature parameters from an input utterance, to generate a keyword model and an extraneous-speech model, to calculate cumulative keyword distance and cumulative extraneous-speech distance, and then to normalize cumulative distance using the word length outputted by the word length calculation device.

In further aspect of the word-spotting program of the present invention, the keyword similarity calculation device (11) calculates likelihood between the feature parameters of the utterance and feature parameters of the keyword model; the extraneous-speech similarity calculation device (12) calculates likelihood between the feature parameters of the utterance and feature parameters of the extraneous-speech model; the cumulative keyword similarity calculation device (32) calculates cumulative keyword likelihood while outputting state transition information; the cumulative extraneous-speech similarity calculation device (33) calculates cumulative extraneous-speech likelihood of the extraneous-speech model; the word length calculation device (34) adds a value larger than 1 to the word length until a transition to a different state takes place if the number of successive self-transitions exceeds a preset value; and the cumulative similarity normalization device (35) normalizes cumulative likelihood of the utterance based on the cumulative keyword likelihood, the cumulative extraneous-speech likelihood, and the word length.

In this way, it is possible to generate feature parameters from an input utterance, to generate a keyword model and an extraneous-speech model, to calculate cumulative keyword likelihood and cumulative extraneous-speech likelihood, and then to normalize cumulative likelihood using the word length outputted by the word length calculation device.

In further aspect of the word-spotting program of the present invention, the word-spotting program makes the computer further function as a duration control device (52) wherein: the cumulative keyword similarity calculation device (42) outputs state transition information; and the duration control device (52) adds a predetermined value to the cumulative keyword similarity if the number of successive self-transitions exceeds a preset value.

In this way, it is possible to generate feature parameters from an input utterance, to generate a keyword model, to calculate cumulative keyword similarity, and then to add a predetermined value to the cumulative keyword similarity if the number of successive self-transitions exceeds a preset value.

In further aspect of the word-spotting program of the present invention, the keyword similarity calculation device (21) calculates keyword distance between the feature parameters of the utterance and feature parameters of the keyword model; and the cumulative keyword similarity calculation device (42) calculates cumulative keyword distance.

In this way, it is possible to generate feature parameters from an input utterance, to generate a keyword model, to calculate cumulative keyword similarity, and then to add a predetermined value to the cumulative keyword similarity if the number of successive self-transitions exceeds a preset value.

In further aspect of the word-spotting program of the present invention, the keyword similarity calculation device (11) calculates likelihood between the feature parameters of the utterance and feature parameters of the keyword model; and the cumulative keyword similarity calculation device (32) calculates cumulative keyword likelihood.

In this way, it is possible to generate feature parameters from an input utterance, to generate a keyword model, to calculate cumulative keyword similarity, and then to add a predetermined value to the cumulative keyword similarity if the number of successive self-transitions exceeds a preset value.

### In the drawings:

FIG. 1 is a conceptual diagram showing a configuration of a keyword model λ consisting of keywords connected at both ends with extraneous-speech models;
FIG. 2 is a diagram showing time variations of likelihood and cumulative likelihood on an optimum path when a wrong keyword and a correct keyword are output according to the prior art;
FIG. 3 is a block diagram showing a configuration of a keyword model λ consisting of keywords connected at both ends with wildcard models;
FIG. 4 is a diagram showing a trellis used when calculating cumulative distance by the Viterbi algorithm method;
FIG. 5 is a diagram showing correspondence between a symbol sequence and keyword model;

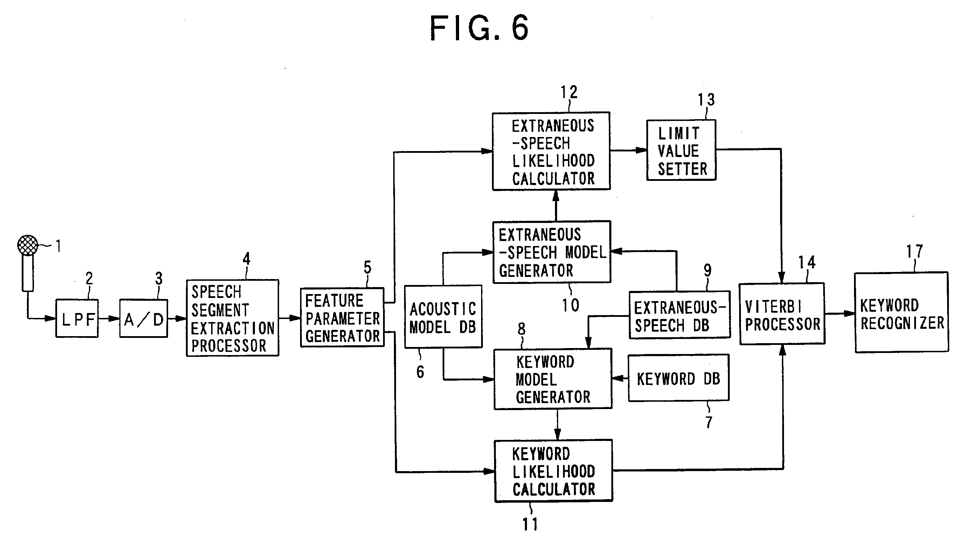

FIG. 6 is a block diagram showing schematic configuration of a word-spotting apparatus according to a first embodiment of the present invention;

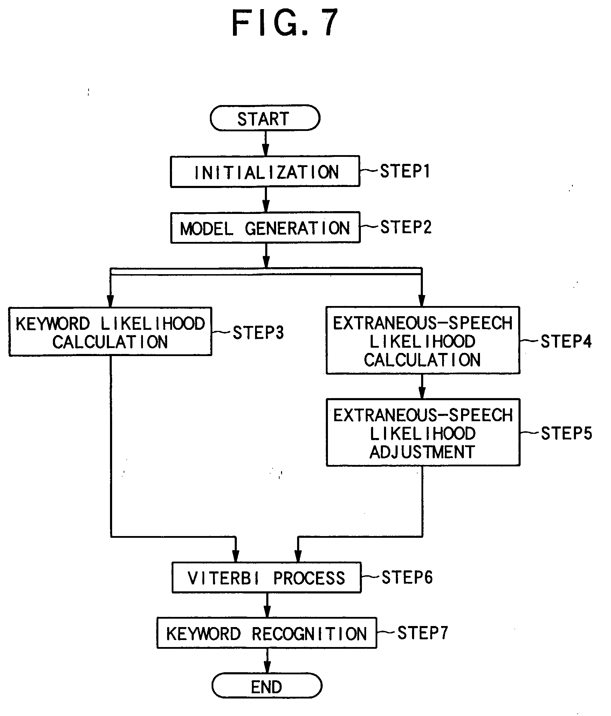

FIG. 7 is a flowchart showing operational overview of a word-spotting apparatus;

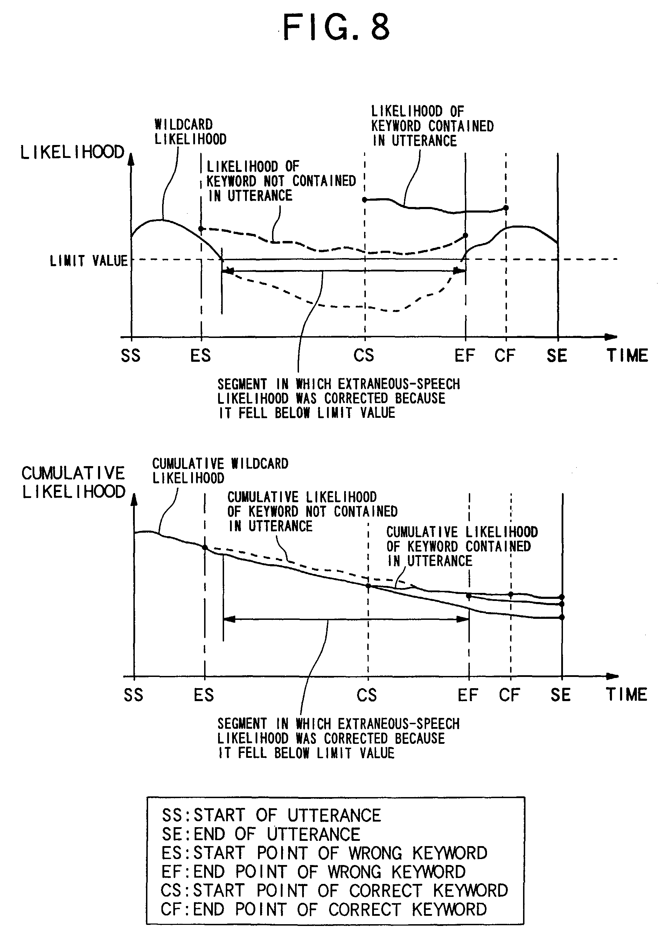

FIG. 8 is a diagram showing time variations of likelihood and cumulative likelihood on an optimum path when a wrong keyword and a correct keyword are output according to the present invention;

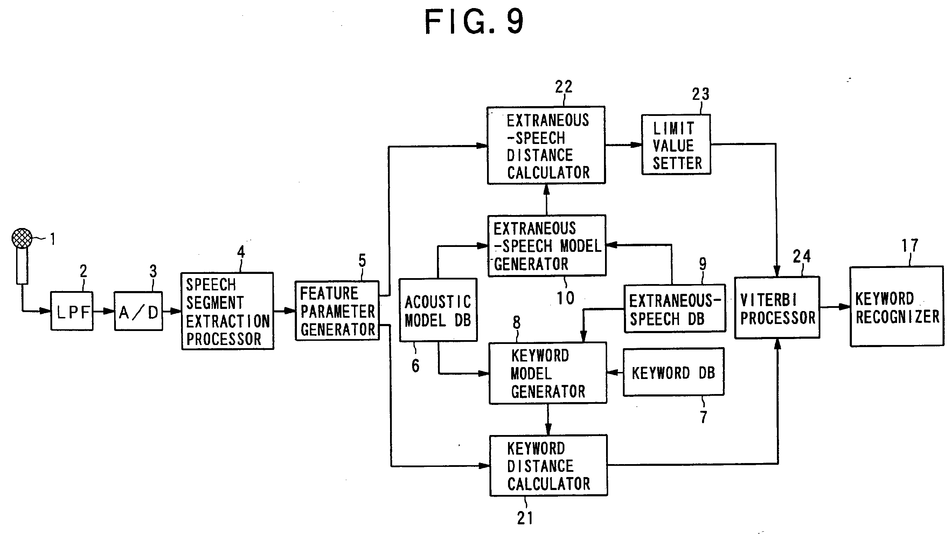

FIG. 9 is a block diagram showing schematic configuration according to a second embodiment;

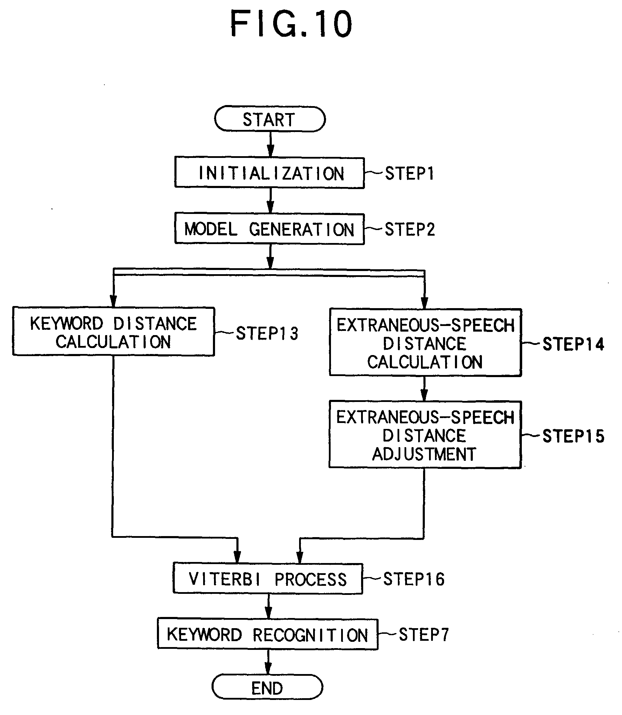

FIG. 10 is a flowchart showing operational overview according to the second embodiment;

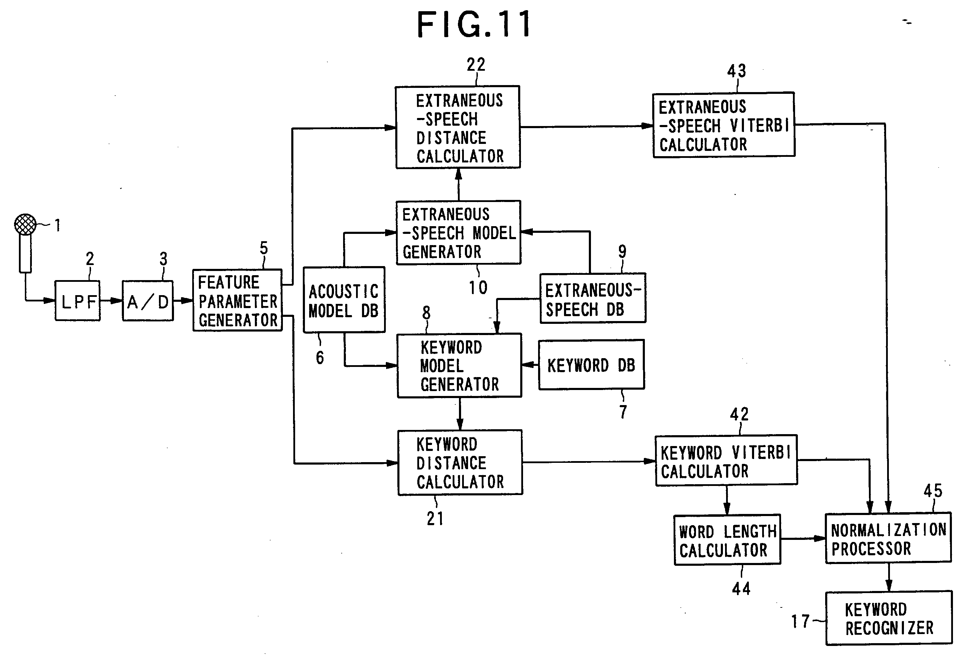

FIG. 11 is a block diagram showing schematic configuration of a word-spotting apparatus according to a third embodiment of the present invention;

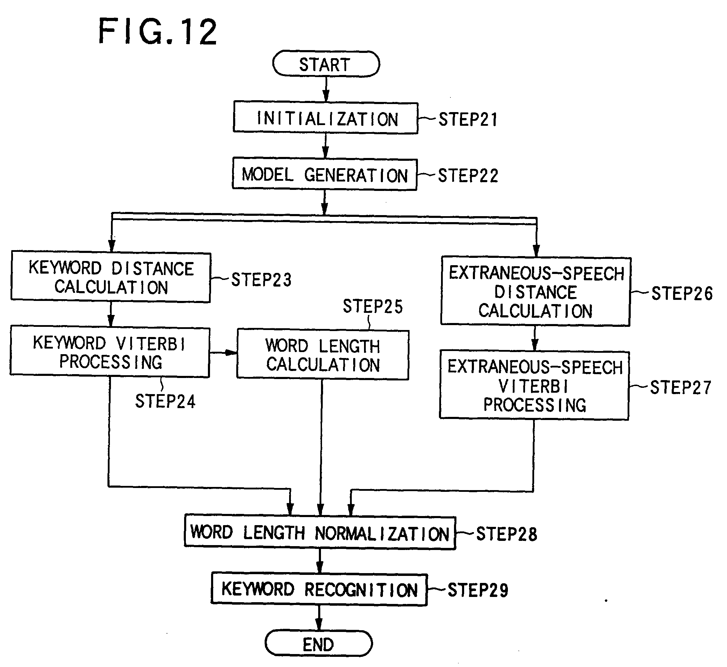

FIG. 12 is a flowchart showing operational overview of the word-spotting apparatus according to the third embodiment of the present invention;

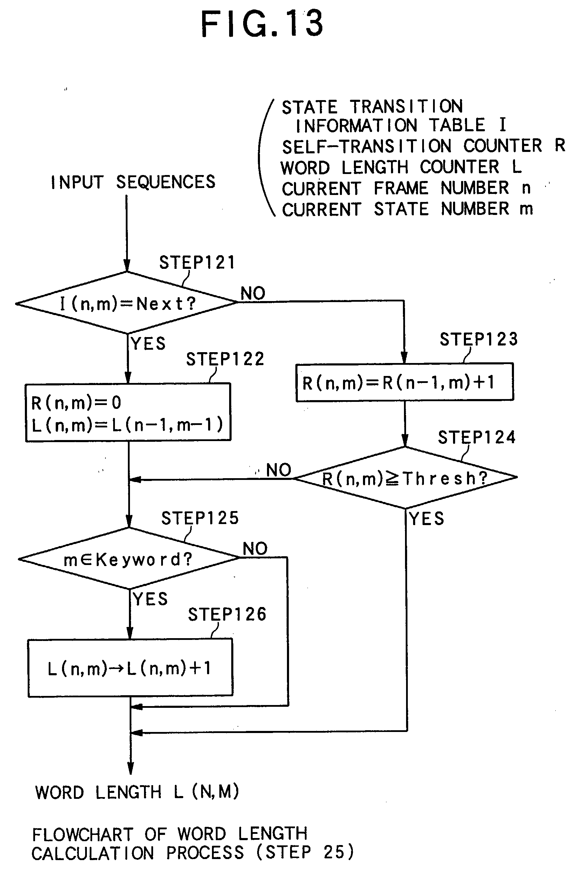

FIG. 13 is a detailed flowchart showing a word length calculation process (STEP 25) of the word-spotting apparatus according to the third embodiment of the present invention;

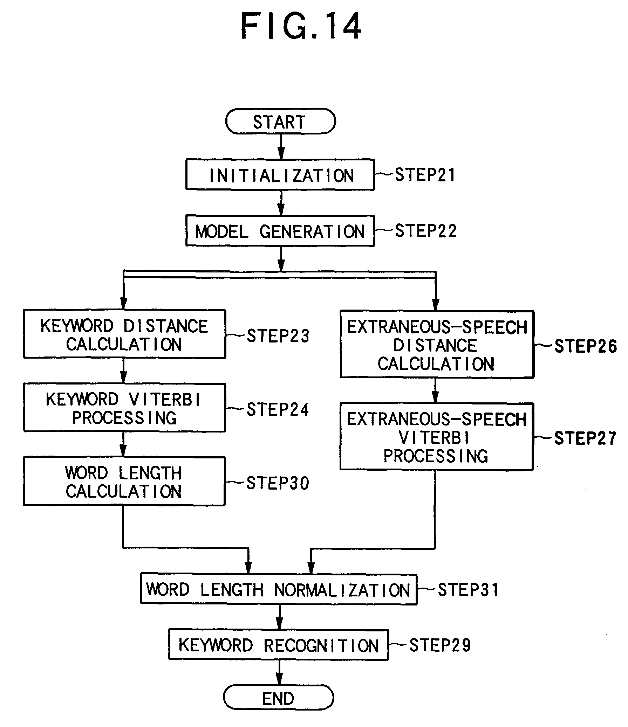

FIG. 14 is a flowchart showing operational overview of a word-spotting apparatus according to a fourth embodiment of the present invention;

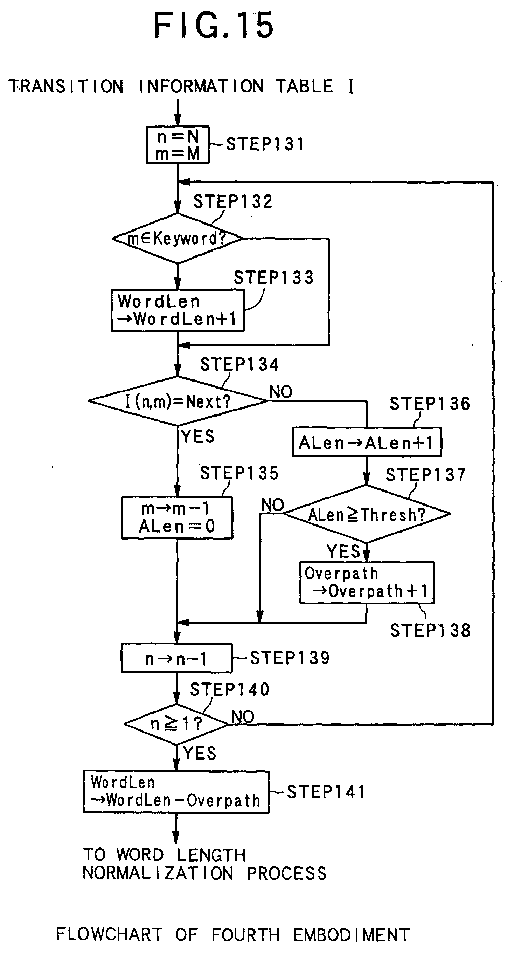

FIG. 15 is a detailed flowchart showing a word length calculation process (STEP 30) of the word-spotting apparatus according to the fourth embodiment of the present invention;

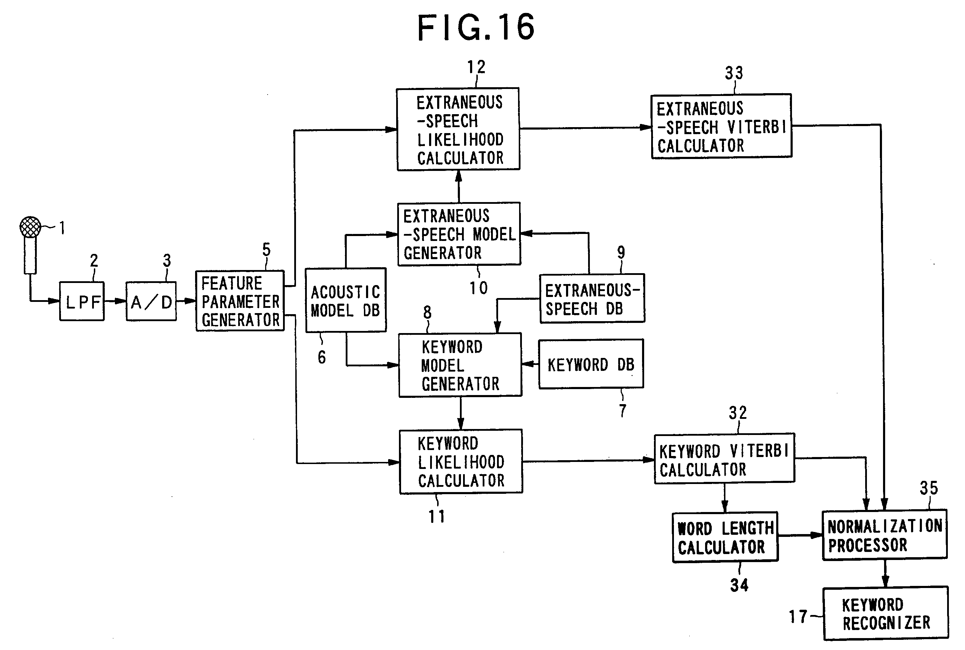

FIG. 16 is a block diagram showing schematic configuration of a word-spotting apparatus according to a fifth embodiment of the present invention;

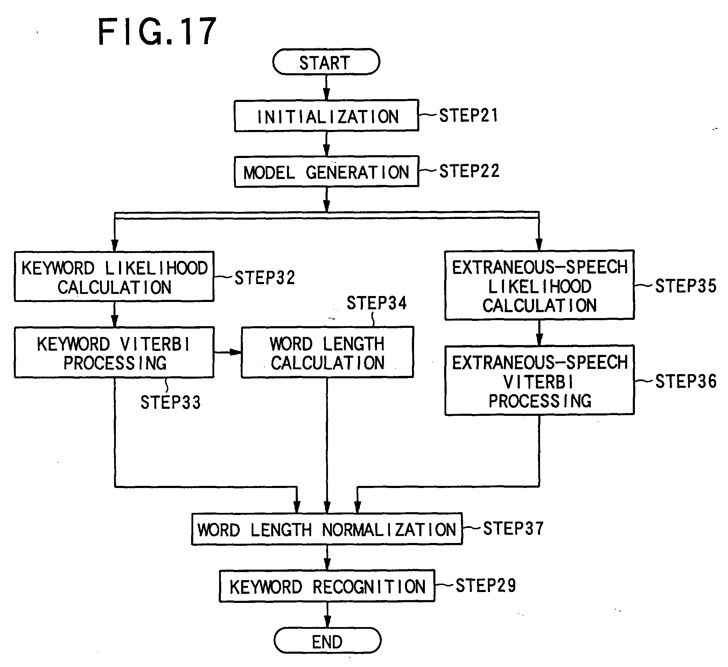

FIG. 17 is a flowchart showing operational overview of a word-spotting apparatus according to a fifth embodiment of the present invention;

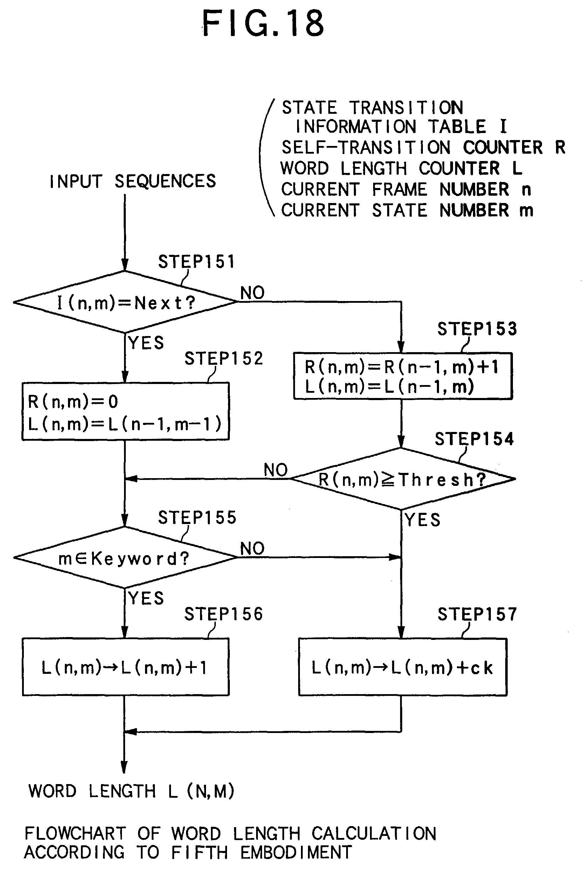

FIG. 18 is a detailed flowchart showing a word length calculation process (STEP 34) of the word-spotting apparatus according to the fifth embodiment of the present invention;

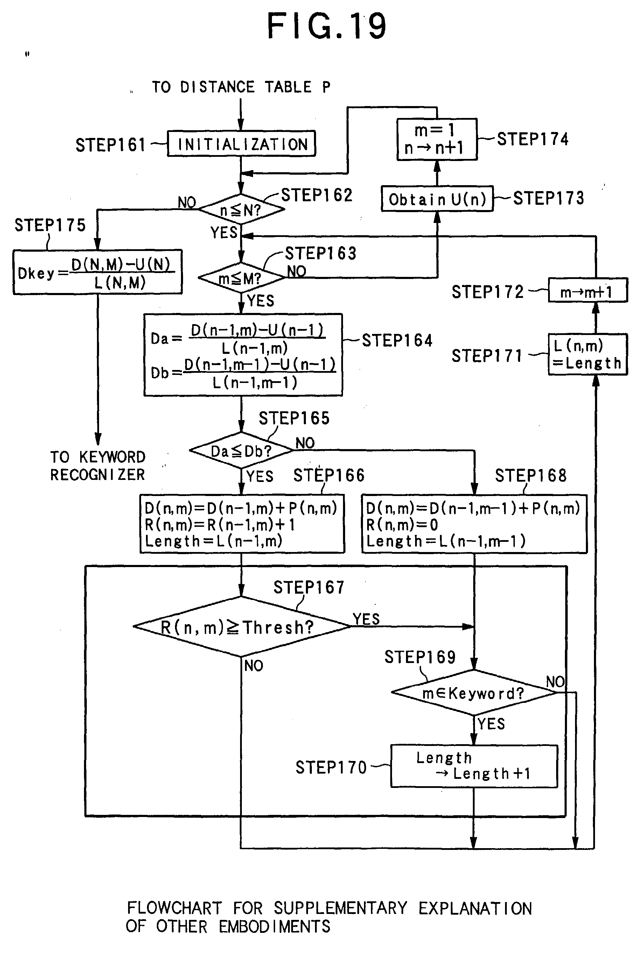

FIG. 19 is a flowchart showing operational overview of a word-spotting apparatus according to a sixth embodiment of the present invention;

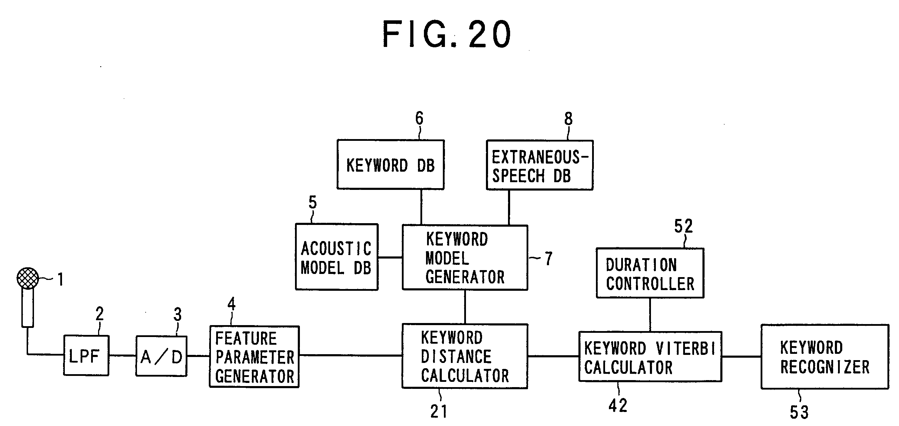

FIG. 20 is a block diagram showing schematic configuration of a word-spotting apparatus according to a seventh embodiment of the present invention;

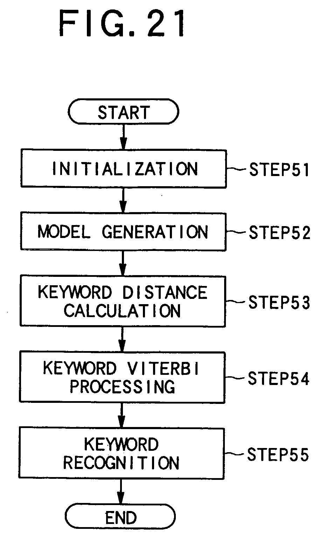

FIG. 21 is a flowchart showing operational overview of a word-spotting apparatus according to the seventh embodiment of the present invention;

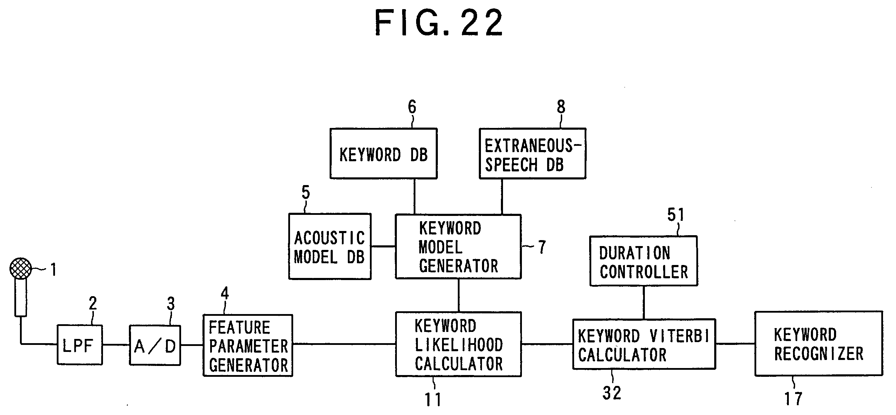

FIG. 22 is a block diagram showing schematic configuration of a word-spotting apparatus according to an eighth embodiment of the present invention; and

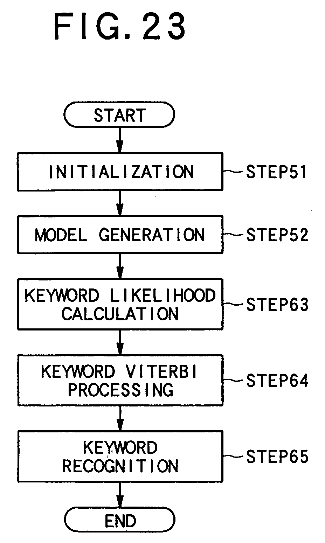

FIG. 23 is a flowchart showing operational overview of a word-spotting apparatus according to the eighth embodiment of the present invention.

A word-spotting apparatus according to a first embodiment of the present invention will be described below with reference to drawings.

FIG. 6 is a block diagram showing schematic configuration of a word-spotting apparatus according to the first embodiment of the present invention.

In this embodiment, similarity is expressed as likelihood (probability). As shown in FIG. 6, the word-spotting apparatus according to this embodiment comprises a microphone 1, LPF (Low Pass Filter) 2, A/D converter 3, speech segment extraction processor 4, feature parameter generator 5 which serves as a feature parameter generating device, acoustic model storage 6 which serves as an acoustic model database, keyword storage 7 which serves as a keyword database, keyword model generator 8 which serves as a keyword model generating device, extraneous-speech storage 9 which serves as an extraneous speech database, extraneous-speech model generator 10 which serves as an extraneous-speech model generating device, keyword likelihood calculator 11 which serves as a keyword similarity calculation device and a keyword likelihood calculation device, extraneous-speech likelihood calculator 12 which serves as an extraneous-speech similarity calculation device and an extraneous-speech likelihood calculation device, limit value setter 13 which serves as a limit value setting device, Viterbi processor 14 which serves as a cumulative similarity calculation device and a cumulative likelihood calculation device, and keyword recognizer 17.

First, input speech is converted into an electrical signal by the microphone 1. Then, high-frequency components are removed from the electrical signal by the LPF 2.

The voice carrying analog signal from the LPF 2 is converted into a digital signal at a predetermined sampling rate by the A/D converter 3.

The speech segment extraction processor 4 consists, for example, of a CPU (Central Processing Unit). It extracts a speech segment from the input digital signal.

The feature parameter generator 5 consists, for example, of a CPU. It further divides the speech segment extracted by the speech segment extraction processor 4 into frames, and generates feature parameters of input speech from the frames. As feature parameters, quantized vectors of linear prediction coefficients, LPC Cepstrum, or energy per frequency band is used commonly.

The acoustic model storage 6 consists, for example, of an HD (Hard Disk). It stores acoustic models at the subword level, i.e., at the phoneme or syllable level. When pronunciation data is input, it generates feature parameters based on a corresponding acoustic model. Also, the acoustic model storage 6 stores transition probabilities.

The keyword storage 7 consists, for example, of an HD. It stores keywords in the form of pronunciation data.

The keyword model generator 8 consists, for example, of a CPU. It extracts keywords outputted from the keyword storage 7 and generates a keyword model by connecting both ends of the extracted keywords with extraneous-speech models. Then, it generates feature parameters of the keyword model by extracting an acoustic model which corresponds to the pronunciation data of the keyword model from the acoustic model storage 6.

The extraneous-speech storage 9 consists, for example, of an HD. It stores extraneous speech in the form of pronunciation data.

The extraneous-speech model generator 10 consists, for example, of a CPU. It extracts extraneous speech outputted from the extraneous-speech storage 9 and generates an extraneous-speech model by connecting both ends of the extracted extraneous speech with extraneous-speech models. Then, it generates feature parameters of the extraneous-speech model by extracting an acoustic model which corresponds to the pronunciation data of the extraneous-speech model from the acoustic model storage 6.

The keyword likelihood calculator 11 consists, for example, of a CPU. It calculates and outputs likelihood (keyword likelihood) between the feature parameters of speech and feature parameters of a keyword model.

The extraneous-speech likelihood calculator 12 consists, for example, of a CPU. It calculates and outputs likelihood (extraneous-speech likelihood) between the feature parameters of the speech and feature parameters of an extraneous-speech model.

The limit value setter 13 consists, for example, of a CPU. If extraneous-speech likelihood outputted by the extraneous-speech likelihood calculator 12 is smaller than a preset value, it outputs the preset value as extraneous-speech likelihood.

The Viterbi processor 14 consists, for example, of a CPU. It calculates cumulative likelihood of a keyword model connected with extraneous-speech models while outputting state transition information which indicates the presence or absence of a state transition.

The keyword recognizer 17 consists, for example, of a CPU. It performs speech recognition using the cumulative likelihood outputted by the Viterbi processor 14.

Operational overview of the word-spotting apparatus with the above configuration will be described below with reference to FIG. 7.

FIG. 7 is a flowchart showing operational overview of a word-spotting apparatus.

First, an initialization process (STEP 1) is carried out in preparation for Viterbi processing.

Spontaneous speech entered through the microphone 1 is filtered by the LPF 2 and subjected to A/D conversion at a predetermined sampling rate by the A/D converter 3. Then, the speech segment extraction processor 4 extracts a speech segment from the spontaneous speech and the feature parameter generator 5 generates feature parameters.

When the initialization process (STEP 1) is finished, the process of generating a keyword model and extraneous-speech model (STEP 2) is started.

The keyword model generator 8 extracts keywords and extraneous speech from the keyword storage 7 and extraneous-speech storage 9 and generates a keyword model by connecting both ends of the extracted keywords with extraneous-speech models. On the other hand, the extraneous-speech model generator 10 extracts extraneous speech outputted from the extraneous-speech storage 9 and generates extraneous-speech models. Then, the keyword model generator 8 and extraneous-speech model generator 10 extract acoustic models and their transition probabilities which correspond to the pronunciation data of the keyword model and extraneous-speech model from the acoustic model storage 6 and generate feature parameters of the keyword model and extraneous-speech models.

When the process of generating a keyword model and extraneous-speech model (STEP 2) is finished, a keyword likelihood calculation process (STEP 3), extraneous-speech likelihood calculation process (STEP 4), and extraneous-speech likelihood adjustment process (STEP 5) are carried out. To begin with, the keyword likelihood calculation process (STEP 3) will be described.

The keyword likelihood calculator 11 calculates and outputs keyword likelihood using the feature parameters of the input speech and feature parameters of the keyword model.

Specifically, the keyword likelihood calculator 11 calculates keyword likelihood by comparing the feature parameters of the input speech and feature parameters of the keyword model generated in STEP 1, on a frame-by-frame basis and outputs the results as the state likelihood P of the given state at each time point in the form of a state likelihood table P (t, m) to the Viterbi processor 14.

Next, description will be given of the extraneous-speech likelihood calculation process (STEP 4) which is carried out concurrently with STEP 3 and extraneous-speech likelihood adjustment process (STEP 5) which is carried out after STEP 4.

The extraneous-speech likelihood calculator 12 calculates the likelihood between the feature parameters of the input speech and feature parameters of the extraneous-speech model. This is calculated in a manner similar to the likelihood between the feature parameters of the input speech and feature parameters of the keyword model calculated in STEP 3.

When the extraneous-speech likelihood calculation process (STEP 4) is finished, the extraneous-speech likelihood adjustment process (STEP 5) is started.

The limit value setter 13 judges whether the extraneous-speech likelihood outputted in the extraneous-speech likelihood calculation process (STEP 4) is lower than a preset value. If the extraneous-speech likelihood is equal to or higher than the preset value, the limit value setter 13 outputs the extraneous-speech likelihood to the Viterbi processor 14. If the extraneous-speech likelihood is lower than the preset value, the limit value setter 13 outputs this preset value to the Viterbi processor 14 as extraneous-speech likelihood.

When the keyword likelihood calculation process (STEP 3), extraneous-speech likelihood calculation process (STEP 4), and extraneous-speech likelihood adjustment process (STEP 5) are finished, the Viterbi process (STEP 6) is carried out.

The Viterbi processor 14 calculates cumulative likelihood based on the state likelihood P between the feature parameters of the input speech and feature parameters of the keyword model outputted in the keyword likelihood calculation process (STEP 3).

After the Viterbi process (STEP 6) is finished, the keyword is recognized and decided upon in a keyword recognition process (STEP 7) based on the outputted cumulative likelihood.

Next, operation of this embodiment will be described with reference to FIG. 8. FIG. 8 is a diagram showing time variations of likelihood and cumulative likelihood on an optimum path when a wrong keyword (keyword not contained in the utterance) and correct keyword (keyword contained in the utterance) are output, wherein the same speech model as FIG. 2 is used. The likelihood used is logarithmic likelihood.

At the time when the likelihood of the extraneous speech lowers below a limit value, the likelihood is replaced by the limit value. This prevents likelihood of the correct keyword from lowering too much in relation to that of the wrong keyword before the start point (CS) of the correct keyword. Consequently, at the end (SE) of the utterance, the cumulative likelihood of the correct keyword is higher than that of the wrong keyword, making it possible to extract the correct keyword.

This embodiment has the following advantages.

A correct keyword can be output even if an extraneous-speech model is not accurate enough to match an utterance.

Since processing for setting a limit value on extraneous-speech likelihood requires very low ability, it can be incorporated easily into a speech recognition apparatus with limited resources such as a navigation system.

Incidentally, the first embodiment is not limited to the example described above, and may be modified as follows.

The similarity used in STEP 3 and STEP 4 may be logarithmic likelihood. The use of logarithmic likelihood will make it possible to calculate the cumulative likelihood (STEP 4) using addition and subtraction, which will speed up computational processes.

### (Second embodiment)

A word-spotting apparatus according to a second embodiment of the present invention will be described with reference to drawings.

FIG. 9 is a block diagram showing schematic configuration of the word-spotting apparatus according to the second embodiment of the present invention. The same components as those in the first embodiment are denoted by the same reference numerals as those in the first embodiment and detailed description thereof will be omitted.

This embodiment differs from the first embodiment in that similarity is expressed as distance whereas in the first embodiment, similarity is expressed as likelihood (probability). Otherwise it is similar to the first embodiment.

As shown in FIG. 9, the word-spotting apparatus according to this embodiment comprises a keyword distance calculator 21 which serves as keyword similarity calculation device and keyword distance calculation device, extraneous-speech distance calculator 22 which serves as extraneous-speech similarity calculation device and extraneous-speech distance calculation device, limit value setter 23 which serves as limit value setting device, and Viterbi processor 24 which serves as cumulative similarity calculation device and cumulative distance calculation device.

The keyword distance calculator 21 consists, for example, of a CPU. It calculates and outputs distance (keyword distance) between feature parameters of input speech and feature parameters of a keyword model.

The extraneous-speech distance calculator 22 consists, for example, of a CPU. It calculates and outputs distance (extraneous-speech distance) between feature parameters of the input speech and feature parameters of an extraneous-speech model.

The limit value setter 23 consists, for example, of a CPU. If extraneous-speech distance outputted by the extraneous-speech distance calculator 22 is larger than a preset value, it outputs the preset value as extraneous-speech distance.

The Viterbi processor 24 consists, for example, of a CPU. It calculates cumulative distance of a keyword model connected with extraneous-speech models.

Operational overview of the word-spotting apparatus with the above configuration will be described below with reference to FIG. 10.

FIG. 10 is a flowchart showing operational overview of the word-spotting apparatus according to the second embodiment. The same components as those in the first embodiment are denoted by the same reference numerals as those in the first embodiment and detailed description thereof will be omitted.

As is the case with the first embodiment, when the process of generating a keyword model and extraneous-speech model (STEP 2) is finished, a keyword distance calculation process (STEP 13), extraneous-speech distance calculation process (STEP 14), and extraneous-speech distance adjustment process (STEP 15) are carried out. To begin with, the keyword distance calculation process (STEP 13) will be described.

The keyword distance calculator 21 calculates and outputs keyword distance between the feature parameters of the input speech and feature parameters of the keyword model.

Specifically, the keyword distance calculator 21 calculates keyword distance by comparing the feature parameters of the input speech and feature parameters of the keyword model generated in STEP 1, on a frame-by-frame basis and outputs the results as the state distance P of the given state at each time point in the form of a state distance table to the Viterbi processor 24.

Next, description will be given of the extraneous-speech distance calculation process (STEP 14) which is carried out concurrently with STEP 13 and extraneous-speech distance adjustment process (STEP 15) which is carried out after STEP 14.

The extraneous-speech distance calculator 22 calculates and outputs the distance between the feature parameters of the input speech and feature parameters of the extraneous-speech model.

When the extraneous-speech distance calculation process (STEP 14) is finished, the extraneous-speech distance adjustment process (STEP 15) is started.

The limit value setter 23 judges whether the extraneous-speech distance outputted in the extraneous-speech distance calculation process (STEP 14) is larger than a preset value. If the extraneous-speech distance is not larger than the preset value, the limit value setter 23 outputs the extraneous-speech distance to the Viterbi processor 24. If the extraneous-speech distance is larger than the preset value, the limit value setter 23 outputs this preset value to the Viterbi processor 24 as extraneous-speech distance.

When the keyword distance calculation process (STEP 13), extraneous-speech distance calculation process (STEP 14), and extraneous-speech distance adjustment process (STEP 15) are finished, the Viterbi process (STEP 16) is carried out.

The Viterbi processor 24 calculates cumulative distance by the Viterbi algorithm method, based on the state distance between the feature parameters of the input speech and feature parameters of the keyword model outputted in the keyword distance calculation process (STEP 13). In the second embodiment, since similarity is expresses as distance, the smaller the distance, the higher the similarity. Consequently, out of two arrows which transition to state i in the Viterbi algorithm method, the one with the smaller cumulative distance is selected. The Viterbi processor 24 outputs the cumulative distance of the last state in the last frame determined at the end of the Viterbi process to the keyword recognizer 17.

After the Viterbi process (STEP 16) is finished, the keyword is recognized and decided upon in a keyword recognition process (STEP 17) based on the outputted cumulative distance.

Incidentally, the second embodiment is not limited to the example described above, and may be modified as follows.

Although Euclidean distance is used in the above example, Mahalanobis distance or Hamming distance may also be used. In short, the present invention can use not only Euclidean distance, but also any parameter which can numerically express difference in similarity.

The first and second embodiments may be modified as follows.

The Viterbi algorithm method is used as the matching method in the above examples, but a DP matching or other technique may also be used. In other words, models which can be used in the speech recognition according to the present invention are not limited to Viterbi-based models, and other models may be used as long as they are classified according to whether they represent states of keywords or states of extraneous speech.

In the above embodiments different functions are performed by different components: the keyword model generator 8, keyword likelihood calculator 11, Viterbi processor 14, extraneous-speech model generator 10, extraneous-speech likelihood calculator 12, and limit value setter 13 in the case of the first embodiment; and the keyword model generator 8, keyword distance calculator 21, Viterbi processor 24, extraneous-speech model generator 10, extraneous-speech distance calculator 22, and limit value setter 23 in the case of the second embodiment. However, since the components use the same internal processes, a single calculation device may perform different functions on a time-shared basis. This will reduce the number of components, resulting in reduced manufacturing costs of the word-spotting apparatuses.

Other than the technical ideas disclosed in the appended claims, technical ideas which can be derived from the above embodiments will be described below together with their advantages.

In the invention set forth in any of claims 4 to 6, 18 to 20, and 32 to 34, the calculation device for calculating cumulative similarity may use a DP matching method. In other words, models which can be used in the speech recognition according to the present invention are not limited to Viterbi-based models, and other models may be used as long as they are classified according to whether they represent states of keywords or states of extraneous speech.

### (Third embodiment)

A word-spotting apparatus according to a third embodiment of the present invention will be described with reference to drawings.

FIG. 11 is a block diagram showing schematic configuration of the word-spotting apparatus according to the third embodiment of the present invention. The same components as those in the above embodiments are denoted by the same reference numerals as those in the above embodiments and detailed description thereof will be omitted.

In this embodiment, similarity is expressed as distance. As shown in FIG. 11, the word-spotting apparatus according to this embodiment comprises a microphone 1, LPF 2, A/D converter 3, feature parameter generator 5 which serves as a feature parameter generating device, acoustic model storage 6 which serves as an acoustic model database, keyword storage 7 which serves as a keyword database, keyword model generator 8 which serves as a keyword model generating device, extraneous-speech storage 9 which serves as an extraneous speech database, extraneous-speech model generator 10 which serves as an extraneous-speech model generating device, keyword distance calculator 21 which serves as a keyword similarity calculation device and a keyword distance calculation device, extraneous-speech distance calculator 22 which serves as an extraneous-speech similarity calculation device and an extraneous-speech distance calculation device, keyword Viterbi calculator 42 which serves as a cumulative keyword similarity calculation device and a cumulative keyword distance calculation device, extraneous-speech Viterbi calculator 43 which serves as a cumulative extraneous-speech similarity calculation device and a cumulative extraneous-speech distance calculation device, word length calculator 44 which serves as a word length calculation device, cumulative distance normalization processor 45 which serves as a cumulative similarity normalization device and a cumulative distance normalization device, and keyword recognizer 17.

The keyword distance calculator 21 consists, for example, of a CPU. It calculates and outputs keyword distance between feature parameters of input speech and feature parameters of a keyword model.

The extraneous-speech distance calculator 22 consists, for example, of a CPU. It calculates and outputs extraneous-speech distance between the feature parameters of the input speech and feature parameters of an extraneous-speech model.

The keyword Viterbi calculator 42 consists, for example, of a CPU. It calculates cumulative keyword distance while outputting state transition information which indicates the presence or absence of a state transition.

The extraneous-speech Viterbi calculator 43 consists, for example, of a CPU. It calculates cumulative extraneous-speech distances of extraneous-speech models.

The word length calculator 44 consists, for example, of a CPU. It calculates word length using the state transition information outputted by the keyword Viterbi calculator 42.

The cumulative distance normalization processor 45 consists, for example, of a CPU. It calculates normalized cumulative distance using cumulative keyword distance and cumulative extraneous-speech distance, based on the word length outputted by the word length calculator 44.

Operational overview of the word-spotting apparatus with the above configuration will be described below with reference to FIG. 12.

FIG. 12 is a flowchart showing operational overview of the word-spotting apparatus.

First, an initialization process (STEP 21) is carried out in preparation for Viterbi processing.

Speech signals entered by the microphone 1 pass through the LPF 2 and A/D converter 3 and goes to the feature parameter generator 5, which then extracts a speech segment from the speech signals, divides it into frames, and generates feature parameters of input speech from the frames.

When the initialization process (STEP 21) is finished, the process of generating a keyword model and extraneous-speech model (STEP 22) is started.

Keywords and extraneous-speech are extracted from the keyword storage 7 and extraneous-speech storage 9. Wildcard models are connected to both ends of the keywords to generate a keyword model. An extraneous-speech model is also generated. The wildcard models connected to the keyword model and extraneous-speech model are the same ones. Acoustic models and goodness of fit of transition which correspond to the pronunciation data of the keyword model and extraneous-speech model are extracted from the acoustic model storage 6, and then feature parameters of the keyword model and extraneous-speech model are generated.

When the process of generating a keyword model and extraneous-speech model (STEP 22) is finished, a keyword distance calculation process (STEP 23) and extraneous-speech distance calculation process (STEP 26) are carried out. The keyword distance calculation process (STEP 23) and subsequent processes (STEPS 24 and 25) will be described.

The keyword distance calculator 21 calculates and outputs the distance between the feature parameters of the input speech and feature parameters of the keyword model.

Specifically, the keyword distance calculator 21 calculates similarity expressed as distance by comparing the feature parameters of the input speech and feature parameters of the keyword model generated in STEP 21, on a frame-by-frame basis and outputs the results as the state distance P of the given state at each time point to a state distance table P (t, m).

When the keyword distance calculation process (STEP 23) is finished, a keyword Viterbi calculation process (STEP 24) is started.

The keyword Viterbi calculator 42 calculates cumulative keyword distance by the Viterbi algorithm method, based on the state distance P between the feature parameters of the input speech and feature parameters of the keyword model outputted in the keyword distance calculation process (STEP 23). The keyword Viterbi calculator 42 outputs state transition information I (t, m) which indicates the presence or absence of a state transition, to the word length calculator 44 in synchronization with frame changes.

Concurrently with the keyword Viterbi calculation process (STEP 24), a word length calculation process (STEP 25) is carried out.

Using the state transition information I (t, m) outputted by the keyword Viterbi calculator 42, the word length calculator 44 calculates word length and outputs it to the cumulative distance normalization processor 45.

Specifically, the word length calculator 44 watches whether self-transitions continue, based on the state transition information I (t, m) outputted in STEP 24. Since output of state transition information means that a frame change took place, the word length calculator 44 increments the word length when state transition information is output. However, if the number of successive transitions from one state to the same state (number of self-transitions) exceeds a preset number (threshold number of self-transitions), the word length calculator 44 does not increment the word length even if a frame changes until a transition to a different state takes place. In this way, the word length calculator 44 prohibits the word length from being increased when self-transitions continue for an unrealistically long time.

It has been found experimentally that the appropriate threshold number of self-transitions varies with the word. Also, it varies with the sampling frequency and the like. It is set such that features of spontaneous speech will not be cancelled.

This ends the word length calculation process (STEP 25).

Next, description will be given of the extraneous-speech distance calculation process (STEP 26) carried out concurrently with STEPS 23 to 25 as well as of an extraneous-speech Viterbi calculation process (STEP 27) carried out subsequently.

The extraneous-speech distance calculator 22 calculates and outputs the distance between the feature parameters of the input speech and feature parameters of the extraneous-speech model. This is calculated in a manner similar to the distance between the feature parameters of the input speech and feature parameters of the keyword model calculated in STEP 23.

When the extraneous-speech distance calculation process (STEP 26) is finished, the extraneous-speech Viterbi calculation process (STEP 27) is carried out.

The extraneous-speech Viterbi calculator 43 calculates cumulative extraneous-speech distance by the Viterbi algorithm method, based on the distance between the feature parameters of the input speech and feature parameters of the extraneous-speech model outputted in the extraneous-speech distance calculation process (STEP 26).

This ends the extraneous-speech Viterbi calculation process (STEP 27).

Next, a word length normalization process (STEP 28) will be described.

When the word length calculation process (STEP 25) and extraneous-speech Viterbi calculation process (STEP 27) are finished, the word length normalization process (STEP 28) is carried out.

After STEPS 25 and 27, upon receiving the cumulative keyword distance and cumulative extraneous-speech distance, the cumulative distance normalization processor 45 subtracts the cumulative extraneous-speech distance from the cumulative keyword distance, normalizes the difference with respect to the word length outputted from the word length calculator 44, and thereby calculates normalized cumulative distance.

When the word length normalization process (STEP 28) is finished, speech recognition is performed using the normalized cumulative distance in a speech recognition process (STEP 29) which follows.

FIG. 13 is a detailed flowchart showing the word length calculation process (STEP 25), including word length control, of the word length calculator 44 according to the third embodiment. Incidentally, the following data are input: the state transition information I, self-transition counter R, word length counter L, current frame number n, and current state number m.

In STEP 121, the word length calculator 44 judges whether the state transition information I (n, m) for the current frame number n and current state number m indicates a transition from a different state. If the result of judgment is "True" (transition from a different state), the word length calculator 44 goes to STEP 122, but if the result of judgment is "False" (self-transition), it goes to STEP 123.

In STEP 122, since the result of judgment is "True" (transition from a different state), the number of self-transitions is counted beginning with the current state, and thus the self-transition counter R (n, m) is reset to 0. At the same time, the word length L (n-1, m-1) for the transition source is stored in the word length L (n, m) for the current frame number n and current state number m.

In STEP 123, since the result of judgment is "False" (self-transition), the counting of self-transitions is continued from the previous frame number, and thus the self-transition counter R (n-1, m) for the transition source is incremented by 1 and the result is substituted into the self-transition counter R (n, m) for the current frame number n and current state number m. At the same time, the word length L (n-1, m) for the transition source is stored in the word length L (n, m) for the current frame number n and current state number m. Then, the word length calculator 44 goes to STEP 124.

In STEP 124, the word length calculator 44 judges whether the self-transition counter R (n, m) for the current frame number n and current state number m indicates a value equal to or higher than a preset threshold Thresh. If the result of judgment is "True" (the self-transition counter R (n, m) indicates a value equal to or higher than the preset threshold Thresh), the word length counter L (n, m) is not incremented. If the result of judgment is "False" (the self-transition counter R (n, m) indicates a value lower than the preset threshold Thresh), the word length calculator 44 goes to STEP 125.

In STEP 125, the word length calculator 44 judges whether the current state m indicates a keyword. If the result of judgment in STEP 125 is "True," L (n, m) for the current frame number n and current state number m is incremented by 1 in STEP 126. If the result of judgment is "False" (m indicates a state of extraneous-speech), the word length counter L (n, m) is not incremented.

The word length and self-transition count determined in STEPS 121 to 126 are stored for each state number m and frame number n while the word length for the last state M in the last frame N is output to the word length normalization process.

This embodiment has the following advantages.

Since the same wildcard models are connected to the keyword model and extraneous-speech model in STEP 22, by subtracting the cumulative extraneous-speech distance from the cumulative keyword distance in STEP 28, it is possible to extract cumulative distance of the keyword itself by eliminating extraneous-speech which tends to be contained in the beginning and end of the speech segment.

It is possible to avoid the phenomenon that the normalized cumulative distance of the correct keyword is smaller than the normalized cumulative distance of the wrong keyword due to an unrealistically long optimum path which results when speech parameters are matched with a keyword model which is not contained in the utterance and has a small number of states.

Since processing for word length control requires very low ability, it can be incorporated easily into a speech recognition apparatus with limited resources such as a navigation system.

### (Fourth embodiment)

A word-spotting apparatus according to a fourth embodiment of the present invention will be described with reference to FIG. 14.

FIG. 14 is a flowchart showing operational overview of the word-spotting apparatus according to the fourth embodiment. Detailed description of the same components as those in the third embodiment will be omitted.

According to the third embodiment, the word length calculator 44, which watches the state transition information I (t, m), does not increment the word length in STEP 25 if the number of self-transitions exceeds the threshold number of self-transitions. According to the fourth embodiment, however, when STEPS 24 and 27 are finished, calculation of the word length (STEP 210) is carried out, skipping STEP 25.

Specifically, according to the fourth embodiment, when STEPS 24 and 27 are finished, the flow goes to a word length calculation process (STEP 30), where the number of self-transitions in excess of the threshold number of self-transitions is counted based on the state transition information I which was recorded in STEP 24. The word length is calculated by subtracting the number in excess of the threshold number of self-transitions from the number of frames in the segment judged to be a speech segment.

When the word length calculation process (STEP 30) is finished, the flow goes to a word length normalization process (STEP 31).

The cumulative distance normalization processor 45 subtracts the cumulative extraneous-speech distance from the cumulative keyword distance, normalizes the difference with respect to the word length outputted from the word length calculator 44, and thereby calculates normalized cumulative distance.

When the word length normalization process (STEP 31) is finished, speech recognition is performed using the normalized cumulative distance in a speech recognition process (STEP 29) which follows.

FIG. 15 is a detailed flowchart showing the word length calculation process (STEP 30), including word length control, of the word length calculator 44 according to the fourth embodiment.

First, an initialization process (STEP 131) is carried out to perform word length control. Specifically, a word length counter WordLen, self-transition counter ALen, and excess word counter Overpath are set to 0 while the current frame number n and current state number m are set to the maximum extracted frame length N and maximum state number M of the keyword model, respectively.

When the initialization process (STEP 131) is finished, the word length is calculated by means of backtracing as shown in STEPS 132 to 140.

First, the word length calculator 44 judges whether the state currently under analysis is a keyword state (STEP 132). If the current state is a keyword state, the word length counter WordLen is incremented by 1 (STEP 133). If the current state is an extraneous-speech state, WordLen is not incremented.

Next, the word length calculator 44 judges whether the state transition information I (n, m) for the current frame number n and current state number m indicates a transition from a different state (STEP 134). If the state transition information I (n, m) indicates a transition from a different state (YES), the current state number m is decremented by 1, and the self-transition counter ALen is initialized to 0 (STEP 135).

If the state transition information I (n, m) indicates a self-transition (NO), the word length calculator 44 increments the self-transition counter ALen by 1 (STEP 136) and judges whether the self-transition counter indicates a value equal to or higher than a preset threshold Thresh (STEP 137). If the self-transition counter indicates a value equal to or higher than the preset threshold Thresh, the word length calculator 44 increments the excess word counter Overpath by 1 (STEP 138). If the self-transition counter indicates a value lower than the preset threshold Thresh, the word length calculator 44 does not increment the excess word counter Overpath.

After performing appropriate processes (STEPS 134 to 138) according to state transition information, the word length calculator 44 decrements the current frame number n by 1 (STEP 139).

Then, the word length calculator 44 judges whether the current frame number has reached the first frame (STEP 140). If the current frame number has returned to the first frame, the value of the excess word counter Overpath is subtracted from the value of the word length counter WordLen (STEP 141) and the difference is output as the calculation result of the word length.

STEPS 132 to 140 are repeated until the current frame reaches the first frame.

This embodiment has the following advantage.

Since this embodiment uses the state transition information I which has been recorded for backtracing, the load of word length calculation is reduced.

Incidentally, the fourth embodiment is not limited to the example described above, and may be modified as follows.

In the embodiment described above, the number of self-transitions in excess of the threshold number of self-transitions is calculated using the state transition information I which has been recorded for backtracing. Alternatively, the number of self-transitions in excess of the threshold number of self-transitions may be stored separately. This will ensure flexibility of programs when need arises to overwrite the state transition information I for some reason.

### (Fifth embodiment)

A word-spotting apparatus according to a fifth embodiment of the present invention will be described with reference to drawings.

FIG. 16 is a block diagram showing schematic configuration of the word-spotting apparatus according to the fifth embodiment of the present invention. The same components as those in the above embodiments are denoted by the same reference numerals as those in the above embodiments and detailed description thereof will be omitted.

This embodiment differs from the third embodiment in that similarity is expressed as likelihood (probability) whereas in the third embodiment, similarity is expressed as distance. Otherwise it is similar to the third embodiment.

As shown in FIG. 16, the word-spotting apparatus according to this embodiment comprises a keyword likelihood calculator 11 which serves as keyword similarity calculation device and keyword likelihood calculation device, extraneous-speech likelihood calculator 12 which serves as extraneous-speech similarity calculation device and extraneous-speech likelihood calculation device, keyword Viterbi calculator 32 which serves as cumulative keyword similarity calculation device and cumulative keyword likelihood calculation device, extraneous-speech Viterbi calculator 33 which serves as cumulative extraneous-speech similarity calculation device and cumulative extraneous-speech likelihood calculation device, word length calculator 34 which serves as word length calculation device, and cumulative distance normalization processor 35 which serves as cumulative similarity normalization device and cumulative likelihood normalization device.

The keyword Viterbi calculator 32 consists, for example, of a CPU. It calculates cumulative keyword likelihood while outputting state transition information which indicates the presence or absence of a state transition.

The extraneous-speech Viterbi calculator 33 consists, for example, of a CPU. It calculates cumulative likelihood of extraneous-speech models.

The word length calculator 34 consists, for example, of a CPU. It calculates word length using the state transition information outputted by the keyword Viterbi calculator 32.

The cumulative likelihood normalization processor 35 consists, for example, of a CPU. It calculates normalized cumulative likelihood using cumulative keyword likelihood and cumulative extraneous-speech likelihood, based on the word length outputted by the word length calculator 34.

Operational overview of the word-spotting apparatus with the above configuration will be described below with reference to FIG. 17.

FIG. 17 is a flowchart showing operational overview of the word-spotting apparatus according to the fifth embodiment. The same components as those in the third embodiment are denoted by the same reference numerals as those in the third embodiment and detailed description thereof will be omitted.

As is the case with the third embodiment, when the process of generating a keyword model and extraneous-speech model (STEP 22) is finished, a keyword likelihood calculation process (STEP 32) and extraneous-speech likelihood calculation process (STEP 34) are carried out. The keyword likelihood calculation process (STEP 32) and subsequent processes (STEPS 33 and 34) will be described.

The keyword likelihood calculator 11 calculates and outputs likelihood between the feature parameters of the input speech and feature parameters of the keyword model.

Specifically, the keyword likelihood calculator 11 calculates likelihood by comparing the feature parameters of the input speech and feature parameters of the keyword model generated in STEP 21, on a frame-by-frame basis and outputs the results as the state likelihood of the given state at each time point to a state likelihood table.

When the keyword likelihood calculation process (STEP 32) is finished, a keyword Viterbi calculation process (STEP 33) is started.

The keyword Viterbi calculator 32 calculates cumulative keyword likelihood by the Viterbi algorithm method, based on the state likelihood between the feature parameters of the input speech and feature parameters of the keyword model outputted in the keyword likelihood calculation process (STEP 32). In the fifth embodiment, since similarity is expresses as likelihood, the higher the likelihood, the higher the similarity. Consequently, out of two arrows which transition to state i in the Viterbi algorithm method, the one with the higher cumulative likelihood is selected. The keyword Viterbi calculator 32 outputs state transition information which indicates the presence or absence of a state transition to the word length calculator 34 in synchronization with frame changes.

A word length calculation process (STEP 34) is carried out concurrently with the keyword Viterbi calculation process (STEP 33).

The word length calculator 34 calculates the word length using the state transition information outputted from the keyword Viterbi calculator 32 and outputs the results to the cumulative likelihood normalization processor 35.

Specifically, the word length calculator 34 watches whether self-transitions continue, based on the state transition information outputted in STEP 33. Since output of state transition information means that a frame change took place, the word length calculator 34 increments the word length when state transition information is output. Besides, if the number of self-transitions exceeds a threshold number of self-transitions, the word length calculator 34 adds a predetermined value to the word length according to the number of self-transitions in excess of the threshold number of self-transitions in addition to incrementing the word length each time state transition information is output until a transition to a different state takes place.

The predetermined value here is large enough to eliminate the impact of unrealistic continuation of self-transitions when normalizing cumulative likelihood with respect to word length. It is determined through learning.

This ends the word length calculation process (STEP 34).

Next, description will be given of the extraneous-speech likelihood calculation process (STEP 35) carried out concurrently with STEPS 32 to 34 as well as of an extraneous-speech Viterbi calculation process (STEP 36) carried out subsequently.

The extraneous-speech likelihood calculator 12 calculates the likelihood between the feature parameters of the input speech and feature parameters of the extraneous-speech model.

When the extraneous-speech likelihood calculation process (STEP 35) is finished, the extraneous-speech Viterbi calculation process (STEP 36) is started.

The extraneous-speech Viterbi calculator 33 calculates cumulative extraneous-speech likelihood by the Viterbi algorithm method, based on the likelihood between the feature parameters of the input speech and feature parameters of the extraneous-speech model outputted in the extraneous-speech likelihood calculation process (STEP 35). Since similarity is expresses as likelihood, the higher the likelihood, the higher the similarity. Consequently, out of two arrows which transit to state i in the Viterbi algorithm method, the one with the higher cumulative likelihood is selected.

This ends the extraneous-speech Viterbi calculation process (STEP 36).

Next, a word length normalization process (STEP 37) will be described.

When the word length calculation process (STEP 34) and extraneous-speech Viterbi calculation process (STEP 36) are finished, the word length normalization process (STEP 37) is carried out.

After STEPS 34 and 36, upon receiving the cumulative keyword likelihood and cumulative extraneous-speech likelihood, the cumulative likelihood normalization processor 35 subtracts the cumulative extraneous-speech likelihood from the cumulative keyword likelihood, normalizes the difference with respect to the word length outputted from the word length calculator 34, and thereby calculates normalized cumulative likelihood.

When the word length normalization process (STEP 37) is finished, speech recognition is performed using the normalized cumulative likelihood in a speech recognition process (STEP 29) which follows.

FIG. 18 is a detailed flowchart showing the word length calculation process (Step 34), including word length control, of the word length calculator 34 according to the fifth embodiment of the present invention. Incidentally, the following data are input: the state transition information I, self-transition counter R, word length counter L, current frame number n, and current state number m.

In STEP 151, the word length calculator 34 judges whether the state transition information I (n, m) for the current frame number n and current state number m indicates a transition from a different state. If the result of judgment is "True" (transition from a different state), the word length calculator 34 goes to STEP 152, but if the result of judgment is "False" (self-transition), it goes to STEP 153.

In STEP 152, since the result of judgment is "True" (transition from a different state), the number of self-transitions is counted beginning with the current state, and thus the self-transition counter R (n, m) is reset to 0. At the same time, the word length L (n-1, m-1) for the transition source is stored in the word length L (n, m) for the current frame number n and current state number m.

In STEP 153, since the result of judgment is "False" (self-transition), the counting of self-transitions is continued from the previous frame number, and thus the self-transition counter R (n-1, m) for the transition source is incremented by 1 and the result is substituted into the self-transition counter R (n, m) for the current frame number n and current state number m. At the same time, the word length L (n-1, m) for the transition source is stored in the word length L (n, m) for the current frame number n and current state number m. Then, the word length calculator 34 goes to STEP 154.

In STEP 154, the word length calculator 34 judges whether the self-transition counter R (n, m) for the current frame number n and current state number m indicates a value equal to or higher than a preset threshold Thresh. If the result of judgment is "True" (the self-transition counter R (n, m) indicates a value equal to or higher than the preset threshold Thresh), a predetermined constant ck larger than 1 is added to the word length counter L (n, m) (STEP 157). If the result of judgment is "False" (the self-transition counter R (n, m) indicates a value lower than the preset threshold Thresh), the word length calculator 34 goes to STEP 155.

In STEP 155, the word length calculator 44 judges whether the current state m indicates a keyword. If the result of judgment in STEP 155 is "True," the word length counter L (n, m) for the current frame number n and current state number m is incremented by 1 in STEP 156. If the result of judgment is "False" (m indicates a state of extraneous-speech), a predetermined constant ck larger than 1 is added to the word length L (n, m) (STEP 157).

The word length and self-transition counter determined in STEPS 151 to 157 are stored for each state number m and frame number n while the word length and self-transition counter for the last state M in the last frame N are output to the word length normalization process.

Incidentally, the fifth embodiment is not limited to the example described above, and may be modified as follows.

The similarity used may be logarithmic likelihood. The use of logarithmic likelihood will make it possible to calculate the cumulative likelihood using addition and subtraction, which will speed up computational processes.

As with the fourth embodiment, the word length calculation device may store the number in excess of the threshold number of self-transitions and add a predetermined value to the word length as many times as the excess number. Also, the number in excess of the threshold number of self-transitions may be determined based on the state transition information. This will reduce the computational load of word length calculation during Viterbi processing.

### (Sixth embodiment)

A word-spotting apparatus according to a sixth embodiment of the present invention will be described with reference to FIG. 19.

FIG. 19 is a flowchart showing operational overview of the word-spotting apparatus according to the sixth embodiment of the present invention. According to the third embodiment described above, after the Viterbi process and word length calculation, the word length is normalized using the final output of the Viterbi process and final output from the word length calculator. According to the sixth embodiment, however, when selecting which state to transition to during Viterbi processing, the then current cumulative distance is normalized for the then current word length and the result of normalization is used to select the state to transition to.

First, an initialization process (STEP 161) is carried out to perform word length control. Specifically, a word length table L and self-transition counter table R are initialized to 0 while the current frame number n and current state number m are set to 1.

Then, detailed Viterbi processing including word length calculation is started. It is judged whether the current frame number n has reached the number N of frames in the speech segment (STEP 162). If the current frame has not reached the end point, the Viterbi processing in STEPS 163 to 172 including word length calculation is repeated until the last frame is processed. When the last frame has been processed, the process in STEP 175 is carried out.

In STEP 163, as is the case with STEP 162, it is judged whether the current state counter m has reached the last state of the keyword model. If the current state has reached the last state, the frame counter n is incremented by 1, the state counter m is initialized to 1 (STEP 174), and the flow returns to STEP 162. If the current state has not reached the last state, the Viterbi processing in STEPS 164 to 172 including word length calculation is repeated for each state.

In STEP 164, information needed to compare cumulative distances for the current state during Viterbi processing is generated. Da represents the normalized cumulative distance of the current state in the previous frame while Db represents the normalized cumulative distance of the previous state in the previous frame. Da and Db are calculated using the cumulative extraneous-speech distance U (n-1) for the current state in the previous frame, word length L (n-1, m), and word length L (n-1, m-1). Specifically, Da is given by the cumulative distance D (n-1, m) of the transition source minus the cumulative extraneous-speech distance U (n-1) for the previous frame, all divided by the word length L (n-1, m) of the transition source. If L (n-1, m) = 0, Da is given by the cumulative distance D (n-1, m) of the transition source minus the cumulative extraneous-speech distance U (n-1) for the previous frame. Similarly, Db is given by the cumulative distance D (n-1, m-1) of the transition source minus the cumulative extraneous-speech distance U (n-1) for the previous frame, all divided by the word length L (n-1, m-1) of the transition source. If L (n-1, m-1) = 0, Db is given by the cumulative distance D (n-1, m-1) of the source state minus the cumulative extraneous-speech distance U (n-1) for the previous frame.

In STEP 165, it is judged whether the two values Da and Db obtained in STEP 164 satisfy Da ≤ Db.

If the result of judgment in STEP 165 is "True," the distance value P (n, m) of the current state in the current frame is added to the cumulative distance D (n-1, m) of the current state in the previous frame and the result is substituted into the cumulative distance D (n, m) of the current state in the current frame. Also, to indicate a self-transition, the self-transition counter R (n, m-1) incremented by 1 is substituted into the self-transition counter R (n, m). Furthermore, since Da ≤ Db is true, to indicate that the transition source of the frame number n and state number m is the frame number n-1 and state number m, L (n-1, m) is substituted into a word length variable Length.

In STEP 167, it is judged whether the self-transition counter R (n, m) indicates a value equal to or lower than a preset threshold Thresh. If the result of judgment in STEP 167 is "True," it is judged whether the current state m falls within a keyword segment (STEP 169). If the result of judgment in STEP 169 is "True," the word length variable Length is incremented by 1. If the result of judgment in STEP 167 or STEP 169 is "False," the flow goes directly to STEP 171, bypassing STEP 170.

If the result of judgment in STEP 165 is "False," the cumulative distance D (n, m) is calculated, the self-transition counter R (n, m) is initialized, and the word length variable Length is calculated in STEP 168. This means that the transition source of the frame number n and state number m is the frame number n-1 and state m-1. In short, the transition here is a transition from a different state. Consequently, the cumulative distance D (n, m) for the frame number n and state number m is given by the sum of the cumulative distance D (n-1, m-1) of the transition source and the distance value P (n, m) of the current state. Also, since the transition is a transition from a different state, the self-transition counter R (n, m) is initialized to 0 and the word length L (n-1, m-1) of the transition source is substituted into the Length variable. Subsequently STEPS 169 and 170 are carried out as when the result of judgment in STEP 167 is "True."

In STEP 171, the Length variable stored temporarily is stored in the word length counter L (n, m). After STEP 171, the state counter m is incremented by 1 in STEP 172.

After the state counter is incremented in STEP 172, the flow goes to STEP 163, where the last state is judged.

When the frames up to the last frame have gone through STEPS 162 and 174, the cumulative distance D (N, M) of the last state in the last frame is normalized using the word length L (N, M) and the cumulative extraneous-speech distance U (N) to obtain normalized cumulative distance D' (N, M) in STEP 175. Specifically, the cumulative extraneous-speech distance U (N) is subtracted from the cumulative distance D (N, M) obtained in STEP 174 and the result is divided by the word length L (N, M) to obtain D' (N, M), which then is output as the result of calculation.

According to this embodiment, since cumulative distance in which word length is reflected can be used for states during Viterbi processing, recognition performance can be improved further.

Incidentally, the first to sixth embodiments may be modified as follows.

The Viterbi algorithm method is used as the matching method in the above examples, but a DP matching or other technique may also be used. In other words, models which can be used in the speech recognition according to the present invention are not limited to Viterbi-based models, and other models may be used as long as they are classified according to whether they represent states of keywords or states of extraneous speech.

Although normalization of word length, calculation of word length, and calculation of extraneous-speech distance are carried out separately in the embodiments described above, if these three processes are synchronized at the frame level, normalized cumulative distance may be used when comparing cumulative distances in different states during Viterbi processing. In that case, since state transition information for Viterbi processing is generated based on the normalized cumulative distance, recognition performance can be improved further.

Although Euclidean distance is used in the above example, Mahalanobis distance or Hamming distance may also be used. In short, the present invention can use not only Euclidean distance, but also any parameter which can numerically express difference in similarity.

In the above embodiments different functions are performed by different components: the keyword model generator 8, keyword distance calculator 21, keyword Viterbi calculator 42, extraneous-speech model generator 10, extraneous-speech distance calculator 22, and extraneous-speech Viterbi calculator 43 in the case of the third embodiment; and the keyword model generator 8, keyword likelihood calculator 11, keyword Viterbi calculator 32, extraneous-speech model generator 10, extraneous-speech likelihood calculator 12, and extraneous-speech Viterbi calculator 33 in the case of the fifth embodiment. However, since the components use the same internal processes, a single calculation device may perform different functions on a time-shared basis. This will reduce the number of components, resulting in reduced manufacturing costs of the word-spotting apparatuses.

Other than the technical ideas disclosed in the appended claims, technical ideas which can be derived from the above embodiments will be described below together with their advantages.

In the invention set forth in any of claims 8, 10, 11, 22, 24, 25, 36, 38, and 39, the calculation device for calculating cumulative similarity may use a DP matching method. In other words, models which can be used in the speech recognition according to the present invention are not limited to Viterbi-based models, and other models may be used as long as they are classified according to whether they represent states of keywords or states of extraneous speech.

In the invention set forth in any of claims 10, 24, and 38, the word length calculation device may store the number of self-transitions in excess of the threshold number of self-transitions and then obtain word length by subtracting the number in excess of the threshold number from the number of frames before normalizing cumulative distance with respect to the word length. This will reduce the computational load of word length calculation during Viterbi processing.

In the invention set forth in any of claims 11, 25, and 39, the word length calculation device may store the number of self-transitions in excess of the threshold number of self-transitions and then add a predetermined value to the word length as many times as the excess number before normalizing cumulative likelihood with respect to the word length. This will reduce the computational load of word length calculation during Viterbi processing.

### (Seventh embodiment)

A word-spotting apparatus according to a seventh embodiment of the present invention will be described with reference to drawings.

FIG. 20 is a block diagram showing schematic configuration of the word-spotting apparatus according to the seventh embodiment of the present invention. The same components as those in the above embodiments are denoted by the same reference numerals as those in the above embodiments and detailed description thereof will be omitted.

In this embodiment, similarity is expressed as distance. As shown in FIG. 20, the word-spotting apparatus according to this embodiment comprises a microphone 1, LPF 2, A/D converter 3, feature parameter generator 4 which serves as feature parameter generating device, acoustic model storage 5 which serves as an acoustic model database, keyword storage 6 which serves as a keyword database, keyword model generator 7 which serves as keyword model generating device, extraneous-speech storage 8, keyword distance calculator 21 which serves as keyword similarity calculation device and keyword distance calculation device, keyword Viterbi calculator 42 which serves as cumulative keyword similarity calculation device and cumulative keyword distance calculation device, duration controller 52 which serves as duration control device, and keyword recognizer 53.

The keyword Viterbi calculator 42 consists, for example, of a CPU. It calculates cumulative keyword distance using adjusted cumulative keyword distance outputted from the duration controller 52 while outputting state transition information which indicates how state transitions are taking place, to the duration controller 52.

The duration controller 52 consists, for example, of a CPU. If the number of successive transitions from one state to the same state (number of self-transitions) exceeds a preset number (threshold number of self-transitions), the duration controller 52 outputs adjusted cumulative keyword distance, obtained by adding a predetermined value to cumulative keyword distance, to the keyword Viterbi calculator 42.

The keyword recognizer 53 consists, for example, of a CPU. It recognizes a keyword using the cumulative keyword distance outputted by the keyword Viterbi calculator 42.

Operational overview of the word-spotting apparatus with the above configuration will be described below with reference to FIG. 21.

FIG. 21 is a flowchart showing operational overview of the word-spotting apparatus.

First, an initialization process (STEP 51) is carried out in preparation for Viterbi processing.

Speech signals entering the microphone 1 pass through the LPF 2 and A/D converter 3 and goes to the feature parameter generator 4, which then extracts a speech segment from the speech signals, divides it into frames, and generates feature parameters of input speech from the frames.

When the initialization process (STEP 51) is finished, a keyword model generating process (STEP 52) is started.

Keywords and extraneous-speech are extracted from the keyword storage 6 and extraneous-speech storage 8. Wildcard models are connected to both ends of the keywords to generate a keyword model. Acoustic models and goodness of fit of transition which correspond to the pronunciation data of the keyword model are extracted from the acoustic model storage 5, and then feature parameters of the keyword model are generated.

When the keyword model generating process (STEP 52) is finished, a keyword distance calculation process (STEP 53) is carried out.

The keyword distance calculator 21 calculates and outputs the distance between the feature parameters of the input speech and feature parameters of the keyword model.

Specifically, the keyword distance calculator 21 calculates similarity expressed as the distance by comparing the feature parameters of the input speech and feature parameters of the keyword model generated in STEP 51, on a frame-by-frame basis and outputs the results as the state distance P of the given state at each time point to a state distance table P (t, m).

When the keyword distance calculation process (STEP 53) is finished, a keyword Viterbi calculation process (STEP 54) is started.

The keyword Viterbi calculator 42 calculates cumulative keyword distance by the Viterbi algorithm method, based on the state distance P between the feature parameters of the input speech and feature parameters of the keyword model outputted in the keyword distance calculation process (STEP 53). The keyword Viterbi calculator 42 outputs state transition information I (t, m) which indicates the presence or absence of a state transition together with the cumulative keyword distance at that time to the duration controller 52 in synchronization with frame changes.

Using the state transition information I (t, m) which was outputted from the keyword Viterbi calculator 42, the duration controller 52 judges whether the number of self-transitions exceeds the threshold number of self-transitions. If the threshold number is exceeded, the duration controller 52 outputs adjusted cumulative keyword distance, obtained by adding a predetermined value to cumulative keyword distance, to the keyword Viterbi calculator 42.

Specifically, the duration controller 52 watches whether self-transitions continue, based on the state transition information I (t, m). Since output of state transition information means that a frame change took place, if the number of self-transitions exceeds a threshold number of self-transitions, the duration controller 52 outputs the adjusted cumulative keyword distance to the keyword Viterbi calculator 42.

It has been found experimentally that the appropriate threshold number of self-transitions varies with the word. Also, it varies with the sampling frequency and the like. It is set such that features of spontaneous speech will not be cancelled.

The threshold number of self-transitions is exceeded when the same sound is uttered in part of speech for an unrealistically long time. Since the predetermined value added to the cumulative distance (which is a cumulative similarity) to remove the unrealistic utterance is a positive value, the adjusted cumulative keyword distance has a larger value than the unadjusted cumulative keyword distance.

When the keyword Viterbi calculation process (STEP 54) is finished for all the frames, speech recognition is performed using the outputted cumulative distance in a speech recognition process (STEP 55) which follows.

This embodiment has the following advantage.

If a threshold number of self-transitions is exceeded, Viterbi processing is performed based on adjusted cumulative keyword distance, obtained by adding a predetermined value (positive value) to cumulative keyword distance. This eliminates situations in which self-transitions continue for an unrealistically long time.

Since the duration control requires very low throughput, it can be incorporated easily into a speech recognition apparatus with limited resources such as a navigation system.

### (Eighth embodiment)

A word-spotting apparatus according to an eighth embodiment of the present invention will be described with reference to drawings.

FIG. 22 is a block diagram showing schematic configuration of the word-spotting apparatus according to the eighth embodiment. The same components as those in the above embodiments are denoted by the same reference numerals as those in the above embodiments and detailed description thereof will be omitted.

This embodiment differs from the seventh embodiment in that similarity is expressed as likelihood (probability) whereas in the seventh embodiment, similarity is expressed as distance. Otherwise it is similar to the seventh embodiment.

As shown in FIG. 22, the word-spotting apparatus according to this embodiment comprises a keyword likelihood calculator 11 which serves as keyword similarity calculation device and keyword likelihood calculation device, keyword Viterbi calculator 32 which serves as cumulative keyword similarity calculation device and cumulative keyword likelihood calculation device, duration controller 51 which serves as duration control device, and keyword recognizer 17.

The duration controller 51 consists, for example, of a CPU. If the number of self-transitions exceeds a threshold number of self-transitions, the duration controller 51 outputs adjusted cumulative keyword likelihood, obtained by adding a predetermined value to cumulative keyword likelihood, to the keyword Viterbi calculator 32.

Operational overview of the word-spotting apparatus with the above configuration will be described below with reference to FIG. 23.

FIG. 23 is a flowchart showing operational overview of the word-spotting apparatus according to the eighth embodiment. The same components as those in the seventh embodiment are denoted by the same reference numerals as those in the seventh embodiment and detailed description thereof will be omitted.

As is the case with the seventh embodiment, when the keyword model generating process (STEP 52) is finished, a keyword likelihood calculation process (STEP 63) is carried out.

The keyword likelihood calculator 11 calculates and outputs the likelihood between the feature parameters of the input speech and feature parameters of the keyword model.

Specifically, the keyword likelihood calculator 11 calculates the likelihood by comparing the feature parameters of the input speech and feature parameters of the keyword model generated in STEP 51, on a frame-by-frame basis and outputs the results as the state likelihood of the given state at each time point to a state likelihood table.

When the keyword likelihood calculation process (STEP 63) is finished, a keyword Viterbi calculation process (STEP 64) is started.

The keyword Viterbi calculator 32 calculates cumulative keyword likelihood by the Viterbi algorithm method, based on the state likelihood between the feature parameters of the input speech and feature parameters of the keyword model outputted in the keyword likelihood calculation process (STEP 63). In the fifth embodiment, since similarity is expresses as likelihood, the higher the likelihood, the higher the similarity. Consequently, out of two arrows which transition to state i in the Viterbi algorithm method, the one with the higher cumulative likelihood is selected. The keyword Viterbi calculator 32 outputs state transition information which indicates the presence or absence of a state transition together with the cumulative keyword likelihood at that time to the duration controller 51 in synchronization with frame changes.

Using the state transition information I which was outputted from the keyword Viterbi calculator 32, the duration controller 51 judges whether the number of self-transitions exceeds the threshold number of self-transitions. If the threshold number is exceeded, the duration controller 51 outputs adjusted cumulative keyword likelihood, obtained by adding a predetermined value to cumulative keyword likelihood, to the keyword Viterbi calculator 32.

Specifically, the duration controller 51 watches whether self-transitions continue, based on state transition information. Since output of state transition information means that a frame change took place, if the number of self-transitions exceeds a threshold number of self-transitions, the duration controller 52 outputs the adjusted cumulative keyword likelihood to the keyword Viterbi calculator 32.

The threshold number of self-transitions is exceeded when the same sound is uttered in part of speech for an unrealistically long time. Since the predetermined value added to the cumulative likelihood (which is a cumulative similarity) to remove the unrealistic utterance is a negative value, the adjusted cumulative keyword likelihood has a smaller value than the unadjusted cumulative keyword likelihood.

When the keyword Viterbi calculation process (STEP 64) is finished for all the frames, speech recognition is performed using the outputted cumulative likelihood in a speech recognition process (STEP 65) which follows.

This embodiment has the following advantage.

If a threshold number of self-transitions is exceeded, Viterbi processing is performed based on adjusted cumulative keyword likelihood, obtained by adding a predetermined value (negative value) to cumulative keyword likelihood. This eliminates situations in which self-transitions continue for an unrealistically long time.

Incidentally, the fifth embodiment is not limited to the example described above, and may be modified as follows.

The similarity used may be logarithmic likelihood. The use of logarithmic likelihood will make it possible to calculate the cumulative likelihood using addition and subtraction, which will speed up computational processes.

Incidentally, the first to eighth embodiments may be modified as follows.

The Viterbi algorithm method is used as the matching method in the above examples, but a DP matching or other technique may also be used. In other words, models which can be used in the speech recognition according to the present invention are not limited to Viterbi-based models, and other models may be used as long as they are classified according to whether they represent states of keywords or states of extraneous speech.

Although Euclidean distance is used in the above example, Mahalanobis distance or Hamming distance may also be used. In short, the present invention can use not only Euclidean distance, but also any parameter which can numerically express difference in similarity.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A word-spotting apparatus, **characterized by**:
a feature parameter generating device (5) which extracts a speech segment from an input utterance, divides it into frames, and generates feature parameters of the utterance;
an acoustic model database (6) which stores feature parameters of speech at a subword level;
keyword model generating device (8) which generates a keyword model using pronunciation data of a keyword outputted from a keyword database (7) and feature parameters outputted from the acoustic model database (6);
a keyword similarity calculation device (11, 21) which calculates keyword similarity between the feature parameters of the utterance and feature parameters of the keyword model; and
a cumulative keyword similarity calculation device (14, 24, 32, 42) which calculates cumulative similarity of the keyword model.

2. The word-spotting apparatus according to claim 1, **characterized in that**:
the cumulative keyword similarity calculation device (14, 24, 32, 42) calculates cumulative similarity using the Viterbi algorithm method.

3. The word-spotting apparatus according to claims 1 or 2, further **characterized by**:
an extraneous-speech model generating device (10) which generates an extraneous-speech model using pronunciation data of extraneous speech outputted from an extraneous-speech database (9) and feature parameters outputted from the acoustic model database (6); and
an extraneous-speech similarity calculation device (12, 22) which calculates extraneous-speech similarity between the feature parameters of the utterance and feature parameters of the extraneous-speech model.

4. The word-spotting apparatus according to claim 3, further comprising a limit value setting device (13, 23), **characterized in that**:
if the extraneous-speech similarity falls outside a preset range, the limit value setting device (13, 23) outputs a preset value as extraneous-speech similarity.

5. The word-spotting apparatus according to claim 4, **characterized in that**:
the keyword similarity calculation device (11) calculates keyword likelihood between the feature parameters of the utterance and feature parameters of the keyword model;
the extraneous-speech similarity calculation device (12) calculates extraneous-speech likelihood between the feature parameters of the utterance and feature parameters of the extraneous-speech model;
if extraneous-speech likelihood is smaller than a preset value, the limit value setting device (13) outputs the preset value as extraneous-speech likelihood; and
the cumulative similarity calculation device (14) calculates cumulative likelihood of the keyword model.

6. The word-spotting apparatus according to claim 4, **characterized in that**:
the keyword similarity calculation device (21) calculates keyword distance between the feature parameters of the utterance and feature parameters of the keyword model;
an extraneous-speech similarity calculation device (22) calculates extraneous-speech distance between the feature parameters of the utterance and feature parameters of the extraneous-speech model;
if extraneous-speech distance is larger than a preset value, the limit value setting device (23) outputs the preset value as extraneous-speech distance; and
the cumulative similarity calculation device (24) calculates cumulative distance of the keyword model.

7. The word-spotting apparatus according to any one of claims 1 or 2, **characterized in that**:
the cumulative keyword similarity calculation device (32, 42) outputs state transition information; and
the word-spotting apparatus further comprises:
a word length calculation device (34, 44) which handles word length according to the number obtained by subtracting a preset value from the number of successive self-transitions, and
a cumulative similarity normalization device (35, 45) which normalizes cumulative similarity of the utterance based on the cumulative keyword similarity and the word length.

8. The word-spotting apparatus according to claim 7, further comprising:
an extraneous-speech model generating device (10) which generates an extraneous-speech model using pronunciation data of extraneous speech outputted from an extraneous-speech database (9) and feature parameters outputted from the acoustic model database (6); and
an extraneous-speech similarity calculation device (12, 22) which calculates extraneous-speech similarity between the feature parameters of the utterance and feature parameters of the extraneous-speech model,
a cumulative extraneous-speech similarity calculation device (33, 43) which calculates cumulative similarity of the extraneous-speech model,
**characterized in that** the cumulative similarity normalization device (35, 45) normalizes the cumulative similarity of the utterance based on the cumulative keyword similarity, the cumulative extraneous-speech similarity, and the word length.

9. The word-spotting apparatus according to claim 8, **characterized in that** the cumulative similarity normalization device (35, 45) normalizes cumulative similarity by dividing the difference between the cumulative keyword similarity and the cumulative extraneous-speech similarity by the word length.

10. The word-spotting apparatus according to any one of claims 8 or 9, **characterized in that**:
the keyword similarity calculation device (21) calculates keyword distance between the feature parameters of the utterance and feature parameters of the keyword model;
the extraneous-speech similarity calculation device (22) calculates extraneous-speech distance between the feature parameters of the utterance and feature parameters of the extraneous-speech model;
the cumulative keyword similarity calculation device (42) calculates cumulative keyword distance while outputting state transition information;
the cumulative extraneous-speech similarity calculation device (43) calculates cumulative extraneous-speech distance of the extraneous-speech model;
the word length calculation device (44) adds nothing to the word length until a transition to a different state takes place if the number of successive self-transitions exceeds a preset value; and
the cumulative similarity normalization device (45) normalizes cumulative distance of the utterance based on the cumulative keyword distance, the cumulative extraneous-speech distance, and the word length.

11. The word-spotting apparatus according to any one of claims 8 or 9, **characterized in that**:
the keyword similarity calculation device (11) calculates likelihood between the feature parameters of the utterance and feature parameters of the keyword model;
the extraneous-speech similarity calculation device (12) calculates likelihood between the feature parameters of the utterance and feature parameters of the extraneous-speech model;
the cumulative keyword similarity calculation device (32) calculates cumulative keyword likelihood while outputting state transition information;
the cumulative extraneous-speech similarity calculation device (33) calculates cumulative extraneous-speech likelihood of the extraneous-speech model;
the word length calculation device (34) adds a value larger than 1 to the word length until a transition to a different state takes place if the number of successive self-transitions exceeds a preset value; and
the cumulative similarity normalization device (35) normalizes cumulative likelihood of the utterance based on the cumulative keyword likelihood, the cumulative extraneous-speech likelihood, and the word length.

12. The word-spotting apparatus according to any one of claims 1 or 2, further comprising a duration control device (52), **characterized in that**:
the cumulative keyword similarity calculation device (42) outputs state transition information; and
the duration control device (52) adds a predetermined value to the cumulative keyword similarity if the number of successive self-transitions exceeds a preset value.

13. The word-spotting apparatus according to claim 12, **characterized in that**:
the keyword similarity calculation device (21) calculates keyword distance between the feature parameters of the utterance and feature parameters of the keyword model; and
the cumulative keyword similarity calculation device (42) calculates cumulative keyword distance.

14. The word-spotting apparatus according to claim 12, **characterized in that**:
the keyword similarity calculation device (11) calculates likelihood between the feature parameters of the utterance and feature parameters of the keyword model; and
the cumulative keyword similarity calculation device (32) calculates cumulative keyword likelihood.

15. A word-spotting method, **characterized by**:
a feature parameter generating process for extracting a speech segment from an input utterance, dividing it into frames, and generating feature parameters of the utterance;
a keyword model generating process for generating a keyword model using pronunciation data of a keyword outputted from a keyword database (7) and feature parameters outputted from an acoustic model database (6) which stores feature parameters of speech at a subword level;
a keyword similarity calculation process for calculating keyword similarity between the feature parameters of the utterance and feature parameters of the keyword model; and
a cumulative keyword similarity calculation process for calculating cumulative similarity of the keyword model.

16. The word-spotting method according to claim 15, **characterized in that**:
in the cumulative keyword similarity calculation process cumulative similarity using the Viterbi algorithm method is calculated.

17. The word-spotting method according to any one of claims 15 or 16, further **characterized by**:
an extraneous-speech model generating process which generates an extraneous-speech model using pronunciation data of extraneous speech outputted from an extraneous-speech database (9) and feature parameters outputted from the acoustic model database (6); and
an extraneous-speech similarity calculation process which calculates extraneous-speech similarity between the feature parameters of the utterance and feature parameters of the extraneous-speech model.

18. The word-spotting method according to claim 17, further comprising a limit value setting process, **characterized in that**:
if the extraneous-speech similarity falls outside a preset range, in the limit value setting process a preset value as extraneous-speech similarity is output.

19. The word-spotting method according to claim 18, **characterized in that**:
in the keyword similarity calculation process, keyword likelihood between the feature parameters of the utterance and feature parameters of the keyword model is calculated;
in the extraneous-speech similarity calculation process, extraneous-speech likelihood between the feature parameters of the utterance and feature parameters of the extraneous-speech model is calculated;
if extraneous-speech likelihood is smaller than a preset value, in the limit value setting process, the preset value as extraneous-speech likelihood is output; and
in the cumulative similarity calculation process, cumulative likelihood of the keyword model is calculated.

20. The word-spotting method according to claim 18, **characterized in that**:
in the keyword similarity calculation process, keyword distance between the feature parameters of the utterance and feature parameters of the keyword model is calculated;
an extraneous-speech similarity calculation process calculates extraneous-speech distance between the feature parameters of the utterance and feature parameters of the extraneous-speech model;
if extraneous-speech distance is larger than a preset value, in the limit value setting process, the preset value as extraneous-speech distance is output; and
in the cumulative similarity calculation process, cumulative distance of the keyword model is calculated.

21. The word-spotting method according to any one of claims 15 or 16, **characterized in that**:
in the cumulative keyword similarity calculation process, state transition information is output; and
the word-spotting apparatus further comprises:
a word length calculation process which handles word length according to the number obtained by subtracting a preset value from the number of successive self-transitions, and
a cumulative similarity normalization process which normalizes cumulative similarity of the utterance based on the cumulative keyword similarity and the word length.

22. The word-spotting method according to claim 21, further comprising:
an extraneous-speech model generating process which generates an extraneous-speech model using pronunciation data of extraneous speech outputted from an extraneous-speech database (9) and feature parameters outputted from the acoustic model database (6); and
an extraneous-speech similarity calculation process which calculates extraneous-speech similarity between the feature parameters of the utterance and feature parameters of the extraneous-speech model,
a cumulative extraneous-speech similarity calculation process which calculates cumulative similarity of the extraneous-speech model,
**characterized in that** in the cumulative similarity normalization process, the cumulative similarity of the utterance based on the cumulative keyword similarity, the cumulative extraneous-speech similarity, and the word length is normalized.

23. The word-spotting method according to claim 22, **characterized in that** in the cumulative similarity normalization process, cumulative similarity by dividing the difference between the cumulative keyword similarity and the cumulative extraneous-speech similarity by the word length is normalized.

24. The word-spotting method according to any one of claims 22 or 23, **characterized in that**:
in the keyword similarity calculation process, keyword distance between the feature parameters of the utterance and feature parameters of the keyword model is calculated;
in the extraneous-speech similarity calculation process, extraneous-speech distance between the feature parameters of the utterance and feature parameters of the extraneous-speech model is calculated;
in the cumulative keyword similarity calculation process, cumulative keyword distance while outputting state transition information is calculated;
in the cumulative extraneous-speech similarity calculation process, cumulative extraneous-speech distance of the extraneous-speech model is calculated;
in the word length calculation process, nothing is added to the word length until a transition to a different state takes place if the number of successive self-transitions exceeds a preset value; and
in the cumulative similarity normalization process, cumulative distance of the utterance based on the cumulative keyword distance, the cumulative extraneous-speech distance, and the word length is normalized.

25. The word-spotting method according to any one of claims 22 or 23, **characterized in that**:
in the keyword similarity calculation process, likelihood between the feature parameters of the utterance and feature parameters of the keyword model is calculated;
in the extraneous-speech similarity calculation process, likelihood between the feature parameters of the utterance and feature parameters of the extraneous-speech model is calculated;
in the cumulative keyword similarity calculation process, cumulative keyword likelihood while outputting state transition information is calculated;
in the cumulative extraneous-speech similarity calculation process, cumulative extraneous-speech likelihood of the extraneous-speech model is calculated;
in the word length calculation process, a value larger than 1 is added to the word length until a transition to a different state takes place if the number of successive self-transitions exceeds a preset value; and
in the cumulative similarity normalization process, cumulative likelihood of the utterance based on the cumulative keyword likelihood, the cumulative extraneous-speech likelihood, and the word length is normalized.

26. The word-spotting method according to any one of claims 15 or 16, further comprising a duration control process, **characterized in that**:
in the cumulative keyword similarity calculation process, state transition information is output; and
in the duration control process, a predetermined value is added to the cumulative keyword similarity if the number of successive self-transitions exceeds a preset value.

27. The word-spotting method according to claim 26, **characterized in that**:
in the keyword similarity calculation process, keyword distance between the feature parameters of the utterance and feature parameters of the keyword model is calculated; and
in the cumulative keyword similarity calculation process, cumulative keyword distance is calculated.

28. The word-spotting method according to claim 26, **characterized in that**:
in the keyword similarity calculation process, likelihood between the feature parameters of the utterance and feature parameters of the keyword model is calculated; and
in the cumulative keyword similarity calculation process, cumulative keyword likelihood is calculated.

29. A word-spotting program running on a computer included in word-spotting apparatus, **characterized in that** the word-spotting program makes the computer function as:
a feature parameter generating device (5) which extracts a speech segment from an input utterance, divides it into frames, and generates feature parameters of the utterance;
an acoustic model database (6) which stores feature parameters of speech at a subword level;
a keyword model generating device (8) which generates a keyword model using pronunciation data of a keyword outputted from a keyword database (7) and feature parameters outputted from the acoustic model database (6);
a keyword similarity calculation device (11, 12) which calculates keyword similarity between the feature parameters of the utterance and feature parameters of the keyword model; and
a cumulative keyword similarity calculation device (14, 24, 32, 42) which calculates cumulative similarity of the keyword model.

30. The word-spotting program according to claim 29, **characterized in that**:
the cumulative keyword similarity calculation device (14, 24, 32, 42) calculates cumulative similarity using the Viterbi algorithm method.

31. The word-spotting program according to any one of claims 29 or 30, **characterized in that** the word-spotting program makes the computer further function as:
an extraneous-speech model generating device (10) which generates an extraneous-speech model using pronunciation data of extraneous speech outputted from an extraneous-speech database (9) and feature parameters outputted from the acoustic model database (6); and
an extraneous-speech similarity calculation device (12, 22) which calculates extraneous-speech similarity between the feature parameters of the utterance and feature parameters of the extraneous-speech model.

32. The word-spotting program according to claim 31, the word-spotting program makes the computer further function as a limit value setting device (13, 23), **characterized in that**:
if the extraneous-speech similarity falls outside a preset range, the limit value setting device (13, 23) outputs a preset value as extraneous-speech similarity.

33. The word-spotting program according to claim 32, **characterized in that**:
the keyword similarity calculation device (11) calculates keyword likelihood between the feature parameters of the utterance and feature parameters of the keyword model;
the extraneous-speech similarity calculation device (12) calculates extraneous-speech likelihood between the feature parameters of the utterance and feature parameters of the extraneous-speech model;
if extraneous-speech likelihood is smaller than a preset value, the limit value setting device (13) outputs the preset value as extraneous-speech likelihood; and
the cumulative similarity calculation device (14) calculates cumulative likelihood of the keyword model.

34. The word-spotting program according to claim 32, **characterized in that**:
the keyword similarity calculation device (21) calculates keyword distance between the feature parameters of the utterance and feature parameters of the keyword model;
the word-spotting program makes the computer further function as: an extraneous-speech similarity calculation device (22) calculates extraneous-speech distance between the feature parameters of the utterance and feature parameters of the extraneous-speech model;
if extraneous-speech distance is larger than a preset value, the limit value setting device (23) outputs the preset value as extraneous-speech distance; and
the cumulative similarity calculation device (24) calculates cumulative distance of the keyword model.

35. The word-spotting program according to any one of claims 29 or 30, **characterized in that**:
the cumulative keyword similarity calculation device (32, 42) outputs state transition information; and
the word-spotting program makes the computer further function as:
a word length calculation device (34, 44) which handles word length according to the number obtained by subtracting a preset value from the number of successive self-transitions, and
a cumulative similarity normalization device (35, 45) which normalizes cumulative similarity of the utterance based on the cumulative keyword similarity and the word length.

36. The word-spotting program according to claim 35, wherein the word-spotting program makes the computer further function as:
an extraneous-speech model generating device (10) which generates an extraneous-speech model using pronunciation data of extraneous speech outputted from an extraneous-speech database (9) and feature parameters outputted from the acoustic model database (6); and
an extraneous-speech similarity calculation device (12, 22) which calculates extraneous-speech similarity between the feature parameters of the utterance and feature parameters of the extraneous-speech model,
a cumulative extraneous-speech similarity calculation device (33, 43) which calculates cumulative similarity of the extraneous-speech model,
**characterized in that** the cumulative similarity normalization device (35, 45) normalizes the cumulative similarity of the utterance based on the cumulative keyword similarity, the cumulative extraneous-speech similarity, and the word length.

37. The word-spotting program according to claim 36, **characterized in that** the cumulative similarity normalization device (35, 45) normalizes cumulative similarity by dividing the difference between the cumulative keyword similarity and the cumulative extraneous-speech similarity by the word length.

38. The word-spotting program according to any one of claims 36 or 37, **characterized in that**:
the keyword similarity calculation device (21) calculates keyword distance between the feature parameters of the utterance and feature parameters of the keyword model;
the extraneous-speech similarity calculation device (22) calculates extraneous-speech distance between the feature parameters of the utterance and feature parameters of the extraneous-speech model;
the cumulative keyword similarity calculation device (42) calculates cumulative keyword distance while outputting state transition information;
the cumulative extraneous-speech similarity calculation device (43) calculates cumulative extraneous-speech distance of the extraneous-speech model;
the word length calculation device (44) adds nothing to the word length until a transition to a different state takes place if the number of successive self-transitions exceeds a preset value; and
the cumulative similarity normalization device (45) normalizes cumulative distance of the utterance based on the cumulative keyword distance, the cumulative extraneous-speech distance, and the word length.

39. The word-spotting program according to any one of claims 36 or 37, **characterized in that**:
the keyword similarity calculation device (11) calculates likelihood between the feature parameters of the utterance and feature parameters of the keyword model;
the extraneous-speech similarity calculation device (12) calculates likelihood between the feature parameters of the utterance and feature parameters of the extraneous-speech model;
the cumulative keyword similarity calculation device (32) calculates cumulative keyword likelihood while outputting state transition information;
the cumulative extraneous-speech similarity calculation device (33) calculates cumulative extraneous-speech likelihood of the extraneous-speech model;
the word length calculation device (34) adds a value larger than 1 to the word length until a transition to a different state takes place if the number of successive self-transitions exceeds a preset value; and
the cumulative similarity normalization device (35) normalizes cumulative likelihood of the utterance based on the cumulative keyword likelihood, the cumulative extraneous-speech likelihood, and the word length.

40. The word-spotting program according to any one of claims 29 or 30, the word-spotting program makes the computer further function as a duration control device (52), **characterized in that**:
the cumulative keyword similarity calculation device (42) outputs state transition information; and
the duration control device (52) adds a predetermined value to the cumulative keyword similarity if the number of successive self-transitions exceeds a preset value.

41. The word-spotting program according to claim 40, **characterized in that**:
the keyword similarity calculation device (21) calculates keyword distance between the feature parameters of the utterance and feature parameters of the keyword model; and
the cumulative keyword similarity calculation device (42) calculates cumulative keyword distance.

42. The word-spotting program according to claim 40, **characterized in that**:
the keyword similarity calculation device (11) calculates likelihood between the feature parameters of the utterance and feature parameters of the keyword model; and
the cumulative keyword similarity calculation device (32) calculates cumulative keyword likelihood.
